# EUROPEAN PATENT SPECIFICATION

(11) **EP 4 483 310 B1**
(45) Date of publication and mention of the grant of the patent: **29.04.2026**
(21) Application number: 22718966.9
(22) Date of filing: 29.03.2022
(51) Int. Cl.: G06Q 10/06

(54) **SYSTEM, APPARATUS AND METHOD FOR MANAGING PLURALITY OF ASSETS**
SYSTEM, VORRICHTUNG UND VERFAHREN ZUR VERWALTUNG MEHRERER VERMÖGENSWERTE
SYSTEME, APPAREIL ET PROCEDE DE GESTION D'UNE PLURALITE D'ACTIFS

(43) Date of publication of application: 01.01.2025
(73) Proprietor: Siemens Aktiengesellschaft, 80333 München (DE)
(72) Inventor: MENON, Nisha, Bangalore, Karnataka 560100 (IN); MITTAL, Akash, Bengaluru, Karnataka 560047 (IN); UPPILI, Umesh, Bangalore, Karnataka 560069 (IN); SABOO, Shantanu, Harda, M.P 461331 (IN); CHATTI, Bhanu venkata sai phani, Narasaraopeta, Andra pradesh 522601 (IN); VENUGOPAL, Aswin, Bengaluru, Karnataka 560100 (IN)
(74) Representative: HKW Intellectual Property PartG mbB
(86) International application number: PCT/EP2022/058317
(87) International publication number: WO 2023/186274

(56) References cited:
- US-A1- 2018 129 941
- US-A1- 2018 165 604
- US-A1- 2019 265 971

## Description

The present invention relates to a field of prediction systems and more particularly relates to management and predictive maintenance of one or more assets in a technical installation.

In an industrial environment, numerous assets employed for performing different operations. The assets may include mechanical systems, electromechanical systems, electronic systems, building facility and so on. Each of the assets may have different attributes such as availability, performance, behavior, efficiency, maintainability, reliability, serviceability and so forth. The attributes of each of the assets in a facility may in turn affect an overall performance of the assets in the industrial environment. In order to predict several parameters and determine an overall performance of the assets predictive analytics techniques are used. Existing predictive analytics solutions determine forecasted parameters or detect anomalies with a very generic approach where a specific solution once designed is applied to every requirement.

There are several disadvantages to the current approach of management of assets in the industrial environment. One of the major problems with the existing solutions is that they do not cater to specific requirements of a targeted domain such as continuous process (oil & gas industry, pharmaceuticals industry and so on), discrete industry (automotive, FMCG, etc), building space, manufacturing factory setup and so forth. Therefore, the existing solutions have low accuracy and low reliability as the solution is not custom made to the specific requirement. Another major problem with the existing solutions is failure to automatically determine sensors that are associated with the assets required for various tasks such as prediction or management of assets. Yet another problem is the lack of integration of new assets into the system in a seamless manner, thereby making the entire workflow complex and time consuming.

Another limitation with existing solutions is the lack of ability to scale the solution to 'n' number of assets that may be added into the industrial environment. Moreover, other limitation with the current systems is the lack of domain knowledge integration into the system in order to address the specific requirements of the assets of a particular industrial environment. Furthermore, the current solutions also lack the capability to automatically train and retrain machine learning models with available domain knowledge and sensor data.

For example, in the case where asset like a heat exchanger, pumps, compressors, chillers require to be managed so as to improve their efficiency, and availability through condition monitoring and predictive maintenance, current solutions require manual steps configuration for each individual asset including their required workflows. Also, a domain expert has to additionally give their inputs to select the right sensors and select the features of importance for each equipment's AI predictive model. This method is time consuming and expensive when this task needs to be applied to number of assets in the industrial environment.

Document US2019/265971 A1 discloses developing and operating enterprise applications, including concentrators to receive and forward time series data from sensors or smart devices.

In light of the above, there exists a need for managing one or more assets in a technical installation using predictive maintenance techniques as disclosed. Therefore, it is an object of the present invention to provide a system, apparatus and method for managing one or more assets in a technical installation.

The object of the present invention is achieved by a method for managing a plurality of assets in a technical installation. The term 'assets' refer to any device, system, instrument or machinery manufactured or used in an industry that may be employed for performing an operation. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Example technical installation include turbines, large drives, manufacturing units, factory set-ups, buildings etc. The method comprises receiving a set of requirements for managing the plurality of assets.

Throughout the present disclosure, the term 'set of requirements' any refer to information related to an expected outcome or analysis requested by an operator (hereinafter, sometimes referred to as a 'user'). Advantageously, the set of requirements may be information pertaining to operation, performance, useful life, anomalies, faults or any other information that the operator may request from the processing unit.

In an embodiment, the method further comprises generating user profiles for one or more users. Herein, each of the user profile is associated with a set of functionalities accessible by the user. Advantageously, the user profiles enable the user to choose a role according to their expertise which would in turn enhance user experience.

The method comprises selecting one or more assets from the plurality of assets based on the received set of requirements. Advantageously, the present invention is capable of selecting relevant one or more assets from the plurality of assets 105 based on the set of requirements. This ensures that the workflow is initiated for targeted number of assets thereby increasing the processing speed of the processing unit.

The method comprises mapping the one or more assets to corresponding sensing units. In an embodiment, the method of mapping of the one or more assets to the corresponding at least one sensing unit comprises determining a relationship between the assets and sensing unit using engineering data. Further, the method comprises mapping the assets to sensing unit based on the determined relationship. According to an embodiment, the method of mapping the asset and the sensing unit further comprises automatically updating the mapping between the asset and the sensing unit in real-time when the sensing unit is online.

The method comprises extracting information associated with the selected one or more assets and the received set of requirements. Herein, the information comprises domain knowledge stored in a knowledge base. Advantageously, the information from the domain knowledge and historical data is also considered for managing the plurality of assets in the technical installation.

The method comprises determining at least one performance indicator based on the information extracted from the knowledge base and the mapped sensing units. Throughout the present disclosure, the term "performance indicator" (herein also referred to as key performance indicator or KPI) as used herein may refer to the parameters that affect the performance of the assets in the technical installation. Advantageously, the present invention is capable of automatically determining performance indicators to initiate the workflow based on the set of requirements from the user. At the same time, the present invention also enables the capability to calculate performance indicators for new assets and new asset categories such that the new asset can be seamlessly integrated into the system.

According to an embodiment, the method of determining the at least one performance indicator comprises selecting at least one sensing unit required for calculating the at least one performance indicator. The method comprises obtaining data from the selected at least one sensing unit required for determining the at least one performance indicator. The method comprises calculating the at least one performance indicator based on the obtained data.

According to an embodiment, the method of calculating at least one performance indicator when a new asset category is added to the technical installation comprises mapping the new asset category to the sensing units associated with the new asset category. Advantageously, the present invention is capable of automatically identifying that a new asset category has been added to the technical installation and eventually mapping the new asset category to the sensing units. Further, the method comprises obtaining information related to the new asset category from a database. Further, the method comprises updating the knowledge base with the information related to the new asset category. Further, the method comprises calculating a set of formula, wherein the set of formula is a function of the data recevied from the sensing units and known performance indicators. Further, the method comprises determining the at least one performance indicator for the new asset category based on the calculated set of formula. Advantageously, the system is capable of automatically calculation the at least one performance indicator for the new asset category and therefore integrate the new asset category into the technical installation in an efficient and accurate manner. Further, the method comprises re-updating the knowledge base with the determined performance indicator. Advantageously, the new asset category can be added into the asset database without any changes in the back-end code.

The method comprises defining a workflow to be executed based on the determined at least one performance indicator. Throughout the present disclosure, the term 'workflow' refers to a set of instructions or task set that is required to be executed in order to determine the outcome as requested. In an embodiment, task is at least one of: anomaly detection in the asset, root cause analysis of the asset, remaining useful life estimation of the asset, forecasting of parameters associated with the asset; performance optimization of the asset, and energy optimization of the asset.

The method comprises selecting a configured machine learning model from a set of machine learning models based on the defined workflow, wherein the set of machine learning models comprises one or more machine learning models configured for determining an outcome of a specific task. Throughout the present disclosure, the term 'machine learning model' as used herein refers to a model for determining a desired outcome given a set of training dataset. Herein, the 'configured machine learning model' refers to any machine learning model that is configured or trained for determining an outcome of a specific task such as anomaly detection in the asset, root cause analysis of the asset, remaining useful life estimation of the asset, performance optimization of the asset, and energy optimization of the asset.

The method comprises determining an outcome of the selected machine learning model based on the received set of requirements. Herein, the outcome of the selected machine learning model is a function of the determined at least one performance indicator of the one or more assets.

According to an embodiment, the method of determining the outcome of the selected machine learning model comprises tuning one or more coefficients of the selected machine learning model using the data received from the at least one sensing unit and the extracted information. The method comprises determining an accuracy of the tuned machine learning model based on the recevied set of requirements. The method comprises determining the outcome of the tuned machine learning model if the accuracy of the tuned machine learning model is above a first predefined threshold value.

According to an embodiment, the method of determining the outcome of the selected machine learning model when a new asset is added to the technical installation comprises mapping the new asset to the sensing units associated with new asset. The method comprises selecting the new sensing units that are required for determining the at least one performance indicator. The method comprises re-tuning the coefficients of the selected machine learning model based on the data obtained from the new sensing units. The method comprises determining the outcome of the re-tuned machine learning model when the new asset is added.

According to an embodiment, the method of determining an outcome of the machine learning model for new asset category comprises determining a new workflow for the new asset category to be executed based on the determined at least one performance indicator. The method comprises selecting a configured machine learning model from the set of pre-configured machined learning models based on the new determined workflow. The method comprises tuning one or more coefficients of the configured machine learning model using the data received from the at least one sensing unit and the knowledge base. The method comprises determining an accuracy of the machine learning model tuned for the new asset category based on the set of requirements. The method comprises determining the outcome of the machine learning model tuned for the new asset category if the accuracy of the tuned machine learning model is above a second predefined threshold value.

According to an embodiment, the method of adding a new machine learning model to the set of machine learning models comprises obtaining data related to the asset for which new machine learning model is to be added. The method comprises training the new machine learning model using the data obtained from the database. The method comprises determining an accuracy of the new machine learning model. The method comprises adding the new machine learning model to the set of machine learning model related to the asset for a specific task if the accuracy of the new machine learning model is above a third predefined threshold value.

According to an embodiment, the method further comprises presenting the determined outcome on a client device for managing the plurality of assets in the technical installation. In a further embodiment, the method comprises an updated set of requirements from the user and determining an updated outcome from the selected machine learning model based on the received updated set of requirements. Further, the method comprises presenting the updated outcome on the client device associated with the user.

The object of the present invention is also achieved by an apparatus for managing one or more assets in a technical installation. The apparatus comprising one or more processing units and a memory unit communicatively coupled to the one or more processing units. The memory unit comprises an asset management module stored in the form of machine-readable instructions executable by the one or more processing units, wherein the asset management module is configured to perform method steps as mentioned above.

The object of the present invention is also achieved by a system for managing plurality of assets in a technical installation. The system comprising one or more devices configured for providing set of requirements for predictive maintenance of the plurality of assets, one or more sensing units for providing data associated with the plurality of assets, a knowledge base comprising domain knowledge related to the plurality of assets and an apparatus communicatively coupled to the one or more devices. The apparatus is configured for managing plurality of assets of the technical installation according to the abovementioned method.

The object of the present invention is also achieved by a computer-program product having machine-readable instructions stored therein, which when executed by one or more processing units, cause the processing units to perform the method as abovementioned.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.
- FIG 1A: illustrates a block-diagram of a system for predictive maintenance of a plurality of assets in a technical installation, in accordance with an embodiment of the present invention;
- FIG 1B: illustrates a block-diagram of an apparatus for predictive maintenance of a plurality of assets in a technical installation, in accordance with an embodiment of the present invention;
- FIG 2: illustrates a block diagram of an architecture of the system of FIG 1, in accordance with an embodiment of the present disclosure;
- FIG 3: illustrates a block diagram of an architecture of the system of FIG 1, in accordance with another embodiment of the present disclosure;
- FIG 4: depicts a flowchart of a method for predictive maintenance of a plurality of assets in a technical installation, in accordance with an embodiment of the present invention;
- FIG 5: depicts a flowchart of a method for determining at the at least one performance indicator, in accordance with an embodiment of the present invention;
- FIG 6: depicts a flowchart of a method for determining the outcome of the selected machine learning model, in accordance with an embodiment of the present invention;
- FIG 7: depicts a flowchart of a method for determining the outcome of the selected machine learning model when a new asset is added to the technical installation, in accordance with an embodiment of the present invention;
- FIG 8: calculating at least one performance indicator when a new asset category is added to the technical installation, in accordance with an embodiment of the present invention;
- FIG 9: depicts a flowchart of a method for determining an outcome of the machine learning model for new asset category, in accordance with an embodiment of the present invention; and
- FIG 10: depicts a flowchart of a method for adding a new machine learning model to the set of machine learning models, in accordance with an embodiment of the present invention.
Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

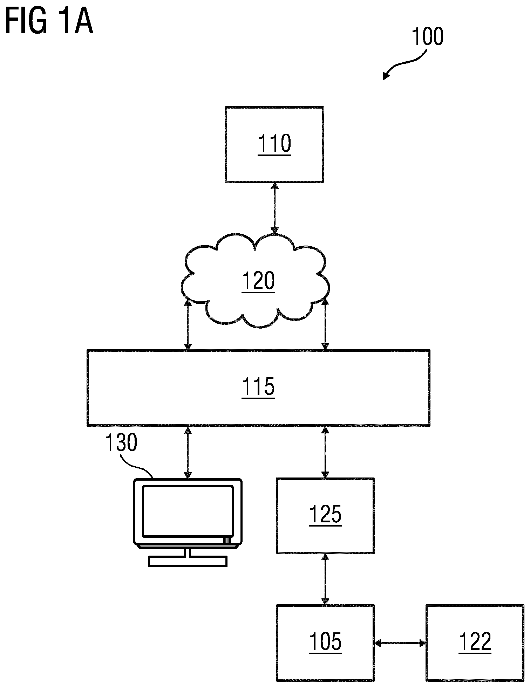

FIG 1A illustrates a block-diagram of a system 100 for managing of a plurality of assets 105 in a technical installation, in accordance with an embodiment of the present invention. Example of the technical installation may be a complex industrial or non-industrial set-up with a plurality of assets 105 such as a power plant, wind farm, power grid, manufacturing facility, process plants, buildings (residential or non-residential areas) and so on. Throughout the present disclosure, the term 'assets' 105 refer to any device, system, instrument or machinery manufactured or used in an industry that may be employed for performing an operation. In some cases, assets 105 may also include any devices or instruments deployed or functioning in a non-industrial environment such as buildings. Example of assets 105 include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils, appliances, electronic devices, chillers, pumps, heat exchangers, cooling towers, air compressors, boilers, fluid bed driers, coating machines, carbonation towers etc.

Throughout the present disclosure, the term 'set of requirements' may refer to information related to an expected outcome or analysis requested by an operator.

Hereinafter, throughout the present disclosure, the term 'operator' and 'user' have been interchangeably used without any limitation. The set of requirements may be input by an operator to the client device 130. In an example, the set of requirements may comprise information pertaining to one or more parameters for predicting the condition of the assets 105. In another example, the set of requirements may include conditions for estimating remaining useful life of the assets 105. In yet another example, the set of requirements may include information for continuous monitoring of the assets 105. In yet another example, the set of requirements may include information for calculating efficiency or metrics of performance of the plurality of assets. Advantageously, the set of requirements may be information pertaining to operation, performance, useful life, anomalies, faults or any other information that the operator may request from the apparatus 110. Throughout the present disclosure, the term 'updated set of requirements' may refer to information related to an expected outcome or analysis requested by an operator after a preceding workflow has been executed by the processing unit.

Throughout the present disclosure, the term 'sensing units' 125 may refer to one or more electronic devices for acquiring and transmitting data from the plurality of assets 105. The sensing units 125 include, but are not limited to, position sensors, rotary encoders, dynamometers, proximity sensors, current sensors, accelerometers, temperature sensors, acoustic sensors, voltage sensors. The sensing units 125 may acquire real-time condition data indicative of one or more operating conditions of the assets 105 in real-time.

Throughout the present disclosure the term 'knowledge base' 122 may refer to a database comprising data and information pertaining to the technical installation in the form of a knowledge graph comprising a plurality of nodes linked to each other. The knowledge base 122 may comprise domain knowledge pertaining to the assets 105 in technical installation.

The set of requirements may be stored in a memory of the edge device 115 or may be input to the edge device 115 by the operator. For example, the edge device 115 may be communicatively coupled to the client device 130. Non-limiting examples of client devices 130 include, personal computers, workstations, personal digital assistants, human machine interfaces. The client device 130 may enable the user to input one or more requirements through a web-based interface. Upon receiving the one or more requirements from the user, the edge device 115 transmits a request for managing the plurality of assets 105 to the apparatus 110.

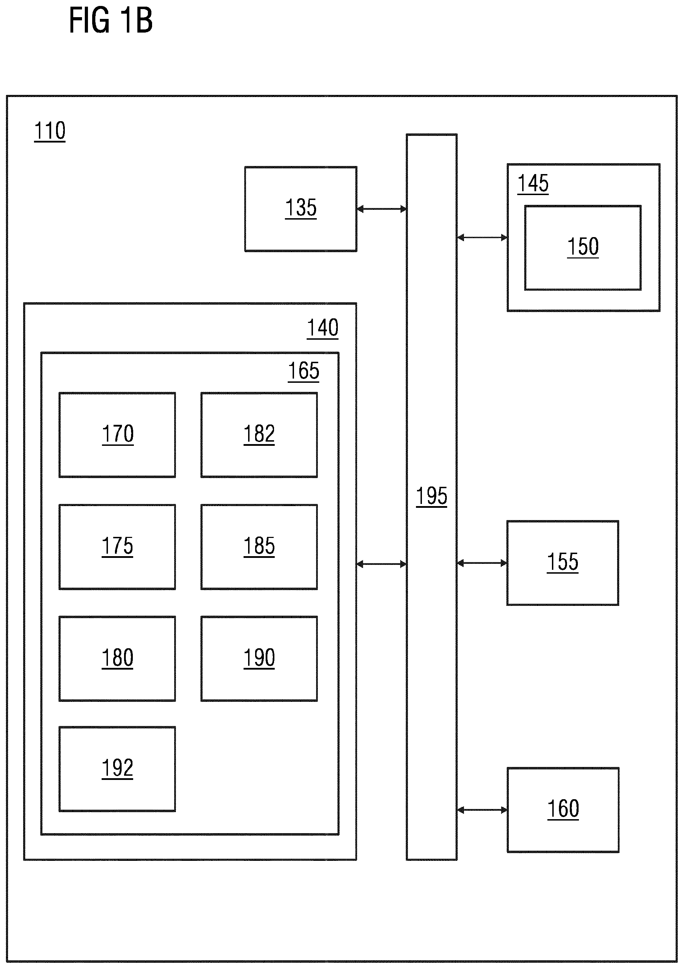

In the present embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 120, for example, the internet. The cloud computing environment provides on-demand network access to a shared pool of the configurable computing physical and logical resources. The apparatus 110 may include an asset management module(shown in FIG 1B) configured for managing, monitoring, detecting anomalies and recommending actions based on predictions. Additionally, the apparatus 110 may include a network interface (not shown) for communicating with the one or more edge devices 115 via the network 120.

In another embodiment, the apparatus 110 can be an edge computing device. As used herein "edge computing" refers to computing environment that is capable of being performed on an edge device (e.g., connected to one or more sensing units in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

As shown in FIG 1B, the apparatus 110 comprises a processing unit 135, a memory unit 140, a storage unit 145, an input unit 155, an output unit 160 and a standard interface or bus 195. The apparatus 110 can be a computer, a workstation, a virtual machine running on host hardware, a microcontroller, or an integrated circuit. As an alternative, the apparatus 110 can be a real or a virtual group of computers (the technical term for a real group of computers is "cluster", the technical term for a virtual group of computers is "cloud").

The term 'processing unit' 135, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 135 may also include embedded controllers, such as generic or programmable logic devices or arrays, application specific integrated circuits, single-chip computers, and the like. In general, a processing unit 135 may comprise hardware elements and software elements. The processing unit 135 can be configured for multi-threading, i.e. the processing unit 135 may host different calculation processes at the same time, executing the either in parallel or switching between active and passive calculation processes.

The processing unit 135 is configured to receive a set of requirements for managing the plurality of assets 105. Further, the processing unit 135 is configured to select one or more assets 105 based on the received set of requirements. Further, the processing unit 135 is configured to map the one or more assets 105 to corresponding sensing units 125. Further, the processing unit 135 is configured to extract information associated with the selected one or more assets 105 and the one or more parameters associated with the assets 105 such as voltage, current, temperature, humidity, etc. The information comprises domain knowledge stored in a knowledge base 122. Further, the processing unit 135 is configured to determine at least one performance indicator based on the information extracted from the knowledge base 122 and the mapped sensing units 125. Further, the processing unit 135 is configured to define a workflow to be executed based on the determined at least one performance indicator. Further, the processing unit 135 is configured to determine a configured machine learning model from a set of machine learning models based on the defined workflow. The set of machine learning models comprises one or more machine learning models configured for determining an outcome of a specific task. Further, the processing unit 135 is configured to determining an outcome of the selected machine learning model based on the received set of requirements. The outcome of the selected machine learning model is a function of the determined at least one performance indicator of the one or more assets 105.

The memory unit 140 may be volatile memory and non-volatile memory. The memory unit 140 may be coupled for communication with the processing unit 135. The processing unit 135 may execute instructions and/or code stored in the memory unit 140. A variety of computer-readable storage media may be stored in and accessed from the memory unit 140. The memory unit 140 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory unit 140 comprises the asset management module 165 in the form of machine-readable instructions on any of the above-mentioned storage media and may be in communication to and executed by the processing unit 135. The asset management module 165 comprises a data acquisition module 170, an asset mapping module 175, an information extraction module 180, a performance indicator determination module 182, a workflow definition module 185, a machine learning model selection module 190 and an output module 192.

The data acquisition module 170 is configured for obtaining the set of requirements for managing the plurality of assets 105. The data acquisition module 170 is also configured for acquiring data from the sensing units 125, and knowledge base 122. Further, the data acquisition module 170 is configured for pre-processing the data and information recevied in a format that can be processed by the further modules. The pre-processing may include data normalization, data translation, data transformation, missing values check, data cleaning, noise filtering, and so forth.

The asset mapping module 175 is configured for selecting one or more assets 105 from the plurality of assets 105 based on the received set of requirements. The asset mapping module 175 is configured for mapping the one or more assets 105 to corresponding sensing units 125. Further, the asset mapping module 175 is configured to determine a relationship between the assets 105 and the sensing units 125 and thereby mapping the assets 105 to corresponding sensing units 125 based on the determined relationship.

The information extraction module 180 is configured for extracting information associated with the selected one or more assets 105 and the recevied set of requirements. The information extraction module 180 is further configured for extracting information from the knowledge base 122 which comprises domain knowledge stored in the form of a knowledge graph.

The performance indicator determination module 182 is configured for determining at least one performance indicator based on the information extracted from the knowledge base 122 and the mapped sensing units 125. The performance indicator determination module 182 is further configured for selecting at least one sensing unit 125 required for calculating the at least one performance indicator. Further, the performance indicator determination module 182 is configured for obtaining data from the selected at least one sensing unit 125 required for determining the at least one performance indicator and then calculating the at least one performance indicator.

The workflow definition module 185 is configured for defining a workflow to be executed based on the at least one performance indicator.

The machine learning model selection module 190 is configured for configuring machine learning model from a set of machine learning models based on the determined task set.

The output module 192 is configured for determining an outcome of the selected machine learning model based on the received set of requirements. Herein, the outcome of the selected machine learning model is a function of the determined at least one performance indicator of the one or more assets 105. The output module 192 is further configured for presenting the determined outcome on the client device 130. Further, the output module 192 is configured for determining an updated outcome from the selected machine learning model based on the received updated set of requirements and presenting the updated outcome of the client device 130.

The storage unit 145 comprises a non-volatile memory which stores the domain knowledge and data as received from the sensing units. The storage unit 145 includes the database 150 that comprises the knowledge graph, historical data such as previously detected anomalies, previous recommendations and so forth. The database 150 may also comprise engineering data, trained machine learning models, synthetic data, and the like. The bus 195 acts as interconnect between the processing unit 135, the memory unit 140, the storage unit 145, the input unit 155 and the output unit 160. The input unit 155 enables the user to input one or more requirements or raise request for managing the assets 105. The output unit 160 is configured for presenting the status of assets 105, detected anomalies, predicted parameters, generated recommendations, and the like.

Those of ordinary skilled in the art will appreciate that the hardware depicted in FIG 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

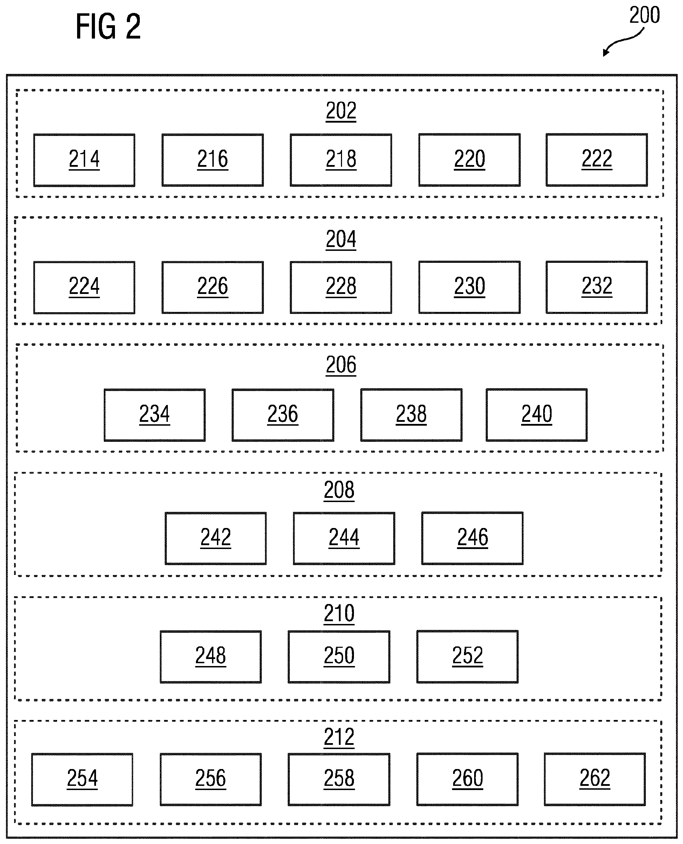

FIG 2 illustrates a block diagram 200 of an architecture of the system of FIG 1, in accordance with an embodiment of the present disclosure. The block diagram 200 illustrated a layered software architecture view of the system 100. As shown the architecture of the system comprises a predictive analytics engine user interface layer 202, predictive analytics engine backend layer 204, data processing layer 206, data storage layer 208, communication layer 210, and data collection layer 212. It should be understood that the layers and components disclosed herein are only for the purpose of illustration and should not be construed limiting to the layers and components as illustrated herein.

The predictive analytics engine user interface layer 202 comprises an AI model library module 214, AI model trainer module 216, AI model simulator module 218, AI workflow manager module 220, system administration module 222. The predictive analytics engine user interface layer 202 is configured to select analytics task set or workflow and/or a particular technical installation (or assets/equipment) to be executed. In an example, the selected workflow maybe process industry, building technology, discrete factory, brownfield, greenfield, or assets like heat exchangers, chillers or pumps. Such a decision can be made by user selection or automatically via the predictive analytics engine user interface layer 202 based on the set of requirements by the user. The predictive analytics engine user interface layer 202 is configured to determine required performance indicators (KPIs), fault descriptions for different assets as a function of available sensors, and integration of domain based know-how in the front end.

The predictive analytics engine user interface layer 202 is also configured to provide web based access, select cyber check and different user profiles. Furthermore, predictive analytics engine user interface layer 202 is configured to transmit the domain information to the predictive analytics engine backend layer 204 for further processing. Furthermore, the predictive analytics engine user interface layer 202 is configured to initiate AI model configuration, for example, selection of different AI model workflows that maybe preconfigured for different assets like pumps or heat exchangers. For example, there maybe an exhaustive list of fault monitoring AI workflows provided for pumps. In such a case, the predictive analytics engine user interface layer 202 is configured to select the appropriate AI workflow based on the available sensing units 125. Furthermore, the predictive analytics engine user interface layer 202 is configured to initiate real time data ingestion services, configuration of sensing units 125 to access relevant data, selection of paths to data sources, for example, file server, OPC-UA server, historian and the like. Furthermore, the predictive analytics engine user interface layer 202 is configured to initiate AI model training, AI model re-training, AI model testing or AI model deployment workflow. The predictive analytics engine user interface layer 202 is further configured to debug the system.

The predictive analytics engine backend layer 204 comprises an AI model library module 224, AI model trainer module 226, AI model simulator module 228, AI workflow manager module 230, system administration module 232. The predictive analytics engine backend layer 204 is configured to interact with the predictive analytics engine user interface layer 202. The predictive analytics engine backend layer 204 is configured to validate users for example, using LDAP, SSO and other techniques. Further, the predictive analytics engine backend layer 204 is configured to configure the cyber check on the user profiles. Further, the predictive analytics engine backend layer 204 is configured to configure the analytics workflows to be execute, for example, process industry, building technology, discrete factory, or for particular assets 105. In an example, the predictive analytics engine backend layer 204 is also configured to allow user to select a workflow with multiple assets tied together for configuration such as overall optimizations, virtual sensing, which may require information from different assets. Furthermore, the predictive analytics engine backend layer 204 is configured to train the selected AI models using both offline and online training, autonomous data pre-processing, optimization workflows and so forth.

Furthermore, the predictive analytics engine backend layer 204 is configured to deploy the AI models, manage the AI model library, interact with other visualization or model building tools, provide debugging data in the form of workflow logs and so forth. Furthermore, the predictive analytics engine backend layer 204 also provide a templating feature for the new assets or new asset categories in the technical installation. The predictive analytics engine backend layer 204 provide the ability to seamlessly add any new asset into the system by adding all related metadata, diagrams, sensors, KPIs and any other available information. Furthermore, the predictive analytics engine backend layer 204 is configured to generate synthetic data using various DOE (Design Of Experiments) for the purpose of proof of concept for several workflows. Furthermore, the simulation models provide ability to incorporate new assets into the AI model library. The predictive analytics engine backend layer 204 is configured to train offline AI model and simulation using synthetic data/real data. Similarly, the predictive analytics engine backend layer 204 is configured to train online AI Model and use real-time data acquired from assets 105 and sensing units 125. Furthermore, the predictive analytics engine backend layer 204 is configured to test the accuracy of the AI Models using test data, ability to do blind tests and provide an insight to the quality of outputs (multivariate input data range checks).

The data processing layer 206 comprises a KPI calculator module 234, a data cleaning module 236, a data structuring module 238, and a data normalization module 240. The data processing layer 206 is configured for pre-processing the data as received from the data storage layer 208.

The data storage layer 208 comprises knowledge base 242, mongoDB 244, and time series database 246. The data storage layer 208 is configured to store data sensor data, knowledge domain information, AI models and so forth as received from the data collection layer 212 through the data communication layer 210. The communication layer 210 comprises OPC UA module 248, TCP/IP module 250, and MQTT module 252. The communication layer 210 acts an interface between the data collection layer 212 and the data processing layer 208 and is configured for transmitting the collected data from the data collection layer 212 to the data processing layer 208.

The data collection layer 212 comprises one or more assets including chillers 254, pumps 256, HVAC 258, PLC 260, exhaust fans 262. It should be understood that these are mere examples and not limited to the particular assets mentioned here. The data collection layer 212 is configured for directly interacting with the sensing units 125 associated with the corresponding assets to acquire data from the assets in real-time.

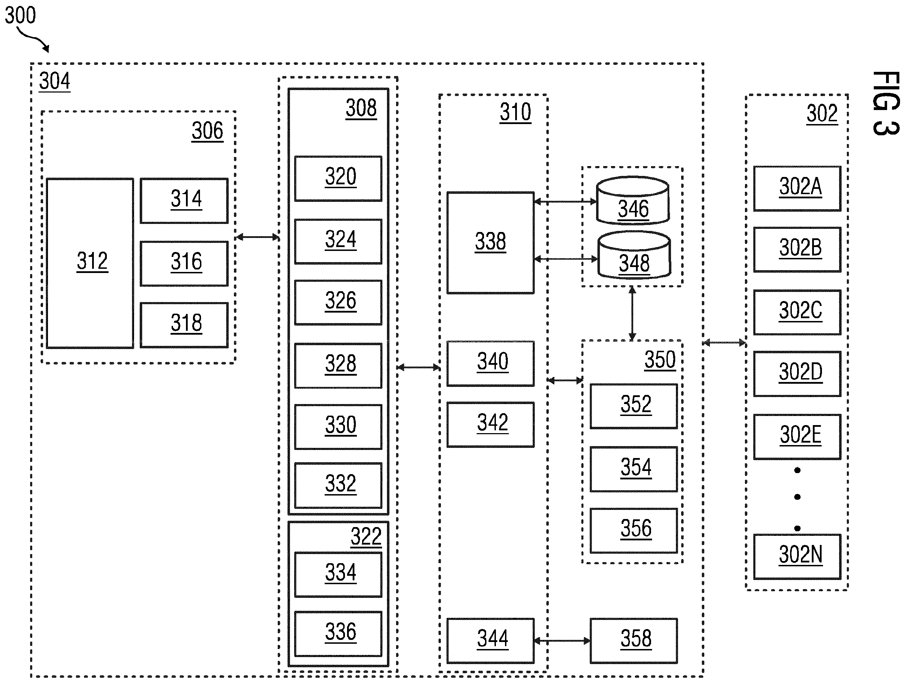

FIG 3 illustrates a block diagram 300 of an architecture of the system of FIG 1, in accordance with another embodiment of the present disclosure. As maybe seen in the block diagram 300, the architecture comprises plurality of assets 302 such as a pump 302A, oil well 302B, a heat exchanger 302C, HVAC 302D, chiller 302E, motor 302N. Further, the architecture includes the server 304 communicatively coupled to the plurality of assets 302A-N over a network. The server 304 comprises a user interface (UI) layer 306, a backend layer 308, and a business connector layer 310.

The UI layer 306 further comprises a navigation application 312, an application framework 314 including configurations, dashboards, workflows, asset monitoring and so forth. Further, the UI layer includes graphics frameworks 316 and angular frameworks 318. The UI layer 306 is communicating with the backend layer 308.

The backend layer 308 further comprises a programming language specific suite 320 and a programming language specific editor 322. In an example, the programming language used herein may be Java or Python. Therefore the Java/Python suite may include AI model training module 324, AI model simulation module 326, AI model prediction module 328, workflow manager module 330, knowledge graph module 332. Further, the programming language specific editor 322, for example node.js may include an admin module 334 and a navigation module 336.

The business connector layer 310 which an application programming interface (API) further comprises database access API 338, security API 340, other APIs 342, and communication protocol access API 344 (such as Kafka). The database access API 338 is communicatively coupled to Mongo database 346 and influx database 348. Further, the Mongo database 346 and influx database 348 are configured to receive data from a communication module 350 comprising OPC/UA module 352, TCP/IP module 354, MQTT module 356. Further, the access API 344 is connected to communication protocol module 358. It should be understood that the layers and components disclosed herein are only for the purpose of illustration and should not be construed limiting to the layers and components as illustrated herein.

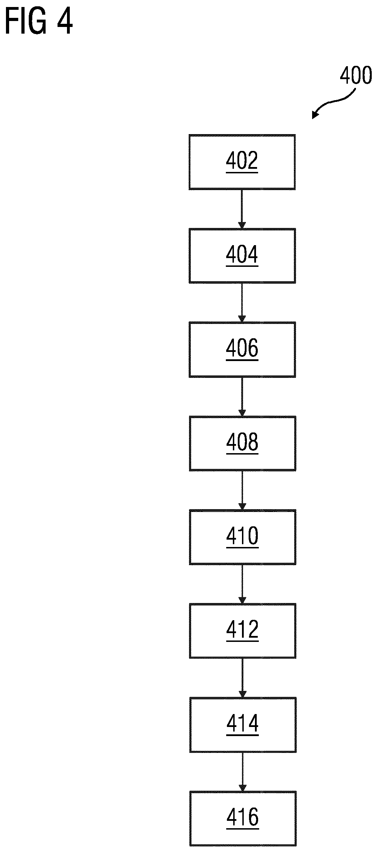

FIG 4 depicts a flowchart of a method 400 for managing a plurality of assets in a technical installation, in accordance with an embodiment of the present invention. At step 402, the set of requirements for maintenance of the plurality of assets 105 is recevied. The set of requirements may be input by the operator using the client device 130. In an example, the set of requirements may comprise information pertaining to one or more parameters for predicting the condition of the assets 105. In another example, the set of requirements may include conditions for estimating remaining useful life of the assets 105. In yet another example, the set of requirements may include information for continuous monitoring of the assets 105. In yet another example, the set of requirements may include information for calculating efficiency or metrics of performance of the plurality of assets 105. Advantageously, the set of requirements may be information pertaining to operation, performance, useful life, anomalies, faults or any other information that the operator may request from the apparatus 110.

The one or more assets 105 may include, but not limited to, any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils, appliances, electronic devices, chillers, pumps, heat exchangers, cooling towers, air compressors, boilers, fluid bed driers, coating machines, carbonation towers and the like.

Throughout the present disclosure, the term "assets" 105 may refer to any assets 105 already existing in the technical installation.

Throughout the present disclosure, the term "new assets" 105 may refer to any asset 105 that is not currently integrated in the technical installation but is similar in specification and operation to one or more assets 105 already existing in the technical installation.

Throughout the present disclosure, the term "new asset category" may refer to any asset that is not currently integrated in the technical installation and is not similar in specification and operation to any of the assets 105 already existing in the technical installation.

It should be understood that managing of the assets 105 may comprise effectively managing the operation of one or more assets 105, prediction of one or more parameters of the assets 105, determination of performance and efficiency of the assets 105, energy optimization of the assets 105, forecasting of various parameters such as load forecasting of the assets 105, calculation of remaining useful life of the assets 105, anomaly detection, root cause analysis of the detected faults in the assets 105, training of artificial intelligence (AI) models for desired output, addition of new assets into the system, and so forth.

According to an embodiment, the method further comprises generating user profiles for one or more users associated with the client device 130. Herein, each of the user profile is associated with a set of functionalities accessible by the user. In an example, the user profiles may be defined by the processing unit 135 based on one or more qualifications and expertise of a particular user. In another example, the user profile may also be defined based on a designation or role of a user in the technical set-up. In yet another example, the user profile may be allocated manually to the users by an administrator of the system. The labels of the user profile could also be defined by the administrator of the system. As an example, a user employed for managing the facility that is only responsible for viewing results, executing workflows, monitoring operation of different assets 105 may be allocated with an 'operator user profile'. The user with 'operator user profile' is completely insulated from functionalities in the back-end such as configuration of AI models, adding new workflows, adding new AI models, training the AI models and so forth. In contrast, a user with expertise in AI models trainings, configurations and coding may be allocated with a 'developer user profile'. The user with 'developer user profile' is allowed to perform functions such as configuration of AI models, adding new workflows, adding new AI models, training the AI models and so forth along with access to other functionalities as well. Advantageously, the user profiles enable the user to choose a role according to their expertise which would in turn enhance user experience. It will be appreciated that the term 'user' as used herein may include a natural person, a robot, an artificial intelligence machine as well without any limitation.

At step 404, one or more assets 105 are selected from the plurality of assets 105 based on the received set of requirements. The selection of the one or more assets 105 or the entire technical installation maybe based on the set of requirements as recevied from the operator. In an example, when the set of requirements is *'Predict the efficiency of pumps in the system',* then the pumps in the technical installation are selected to determine the desired output i.e. the efficiency of the pumps. In another example, when the set of requirements is *'Provide maintenance schedule of the chillers',* then the chillers installed in the outlet or factory will be selected to initiate the workflow. In yet another example, when the requirement is *'predict energy consumption in a building',* then the entire building comprises multiple assets is selected for determining such an outcome. It will be appreciated that the disclosed system is capable of selecting relevant one or more assets 105 from the plurality of assets 105 based on the set of requirements. This ensures that the workflow is initiated for targeted number of assets thereby increasing the processing speed of the system.

At step 406, the one or more assets 105 are mapped to corresponding sensing units 125. It is important for the accuracy of the system to correctly map the selected assets 105 to the sensing units 125 for obtaining relevant data. According to an embodiment, the mapping of the one or more assets 105 to the corresponding at least one sensing unit 125 comprises determining a relationship between the assets 105 and sensing unit 125 using engineering diagrams. Throughout the present disclosure, the term 'engineering diagrams' as used herein may refer to diagrams are used to convey technical information pertaining to the plurality of assets 105. The engineering diagrams include diagrams such as circuit diagrams, schematics, technical manuals, asset specification data, wiring plans, floor plans, asset datasheets, piping and instrumentation diagrams and so forth. In an exemplary implementation, the relationship between the assets 105 and sensing unit 125 is determined using the piping and instrumentation diagram (P&ID). Herein, the piping and instrumentation diagram (P&ID) represent a detailed diagram in the process industry which shows the piping and the process equipment along with the instrumentation and control devices. As known in the art, P&IDs are originally drawn up at the design stage from a combination of process flow sheet data, the mechanical process equipment design, and the instrumentation engineering design. During the design stage, the diagram also provides the basis for the development of system control schemes, allowing for further safety and operational investigations, such as a Hazard and operability study (HAZOP). Therefore, P&ID demonstrate the physical sequence of assets and sensing units in the technical installation, as well as how these assets are connected. P&IDs also play a significant role in the maintenance and modification of the process after initial build.

In an example, the P&IDs may contain information related to assets 105 such as pressure vessels, columns, tanks, pumps, compressors, heat exchangers, furnaces, fans, cooling towers, strainers and filters, orifices, steam traps, moisture traps, flares and vents, silencers, and so forth. In another example, the P&IDs may contain information related to process piping, sizes and identification such as pipe classes and piping in line numbers, flow directions, interconnection references, start-up lines, flush lines, bypass lines, flowlines, pipelines, blinds, insulation and heat tracing and the like. In yet another example, the P&IDs may also include process control instrumentation and designation such as names, numbers, unique tag identifiers, valves and their types and identification, control inputs and outputs, vents, drains, special fittings, sampling lines, reducers, and other miscellaneous information.

According to another embodiment, the assets 105 may be mapped to the sensing unit 125 based on the information stored in the knowledge base 122. According to another embodiment, the users/operators may also be prompted to map the relevant assets 105 to the sensing units 125 using a web-based interface in the client device 130. According to another embodiment, the method of mapping the assets 105 to the sensing units 125 further comprises automatically updating the mapping between the asset 105 and the sensing unit 125 in real-time when the sensing unit 125 is online. It will be appreciated that the sensing units 125 and assets 105 may be mapped both at the initiation of any workflow as well as anytime during the execution of the workflow. Let us consider a case when a crucial sensing unit 125 was offline or not available during the mapping stage. In such a case, the particular sensing unit 125 can be mapped to the sensor later in time and the workflow can be updated in real-time, thereby increasing the efficiency and accuracy of the system.

The relationships may be determined by analyzing the information stored in the engineering diagrams. Henceforth, the selected assets 105 are mapped to the at least one sensing unit 125 based on the determined relationship. Furthermore, once the assets 105 are mapped to the sensing unit 125 then the data from the sensing units 125 is acquired for further analysis as requested. According to an embodiment, the method of obtaining the data from the sensing unit 125 comprises establishing a connection between the processing unit 135 and a source of data associated with the sensing unit 125. Herein, the source is an address of the sensing unit 125. Further, the data is obtained from the sensing unit in real-time via the established connection. In an exemplary implementation, the processing unit 135 runs a data ingestion service in the backend server to get real-time data from OPC-UA/WinCC servers. Furthermore, the data can be directly acquired from the SCADA systems associated with the assets 105.

According to another embodiment, the method of obtaining the data from the sensing unit 125 comprises establishing a connection between the processing unit 135 and a source of the data associated with the sensing unit 125. Herein, the source is a database. In an example, the data from the sensing units 125 maybe acquired and stored in the database on a periodic basis. In another example, the data maybe uploaded in the database by the operator for analysis. Further, once the connection is established the data is obtained from the database. In an exemplary implementation, the processing unit 135 runs a data loader service to fetch the specific instance of database (for example, Influx, SQlite etc) from where the data is obtained as requested.

At step 408, information associated with the selected one or more assets 105 and the received set of requirements is extracted from the knowledge base 122. Herein, the information comprises domain knowledge stored in the knowledge base 122. The knowledge base 122 may comprise information in the form of a knowledge graph. The knowledge graph may contain one or more linked nodes capturing domain knowledge and indicative of parameters and corresponding responses pertaining to the one or more components of the asset 105, history of failures of the asset 105, historical data pertaining to parameter values of the one or more components of the asset 105, failure predictions and corresponding cause of failures and so forth. It should be noted that each of linked nodes is connected using one or more paths or edges. The knowledge graph includes asset specific information, data pertaining to conceptualization of the asset 105, data pertaining to designing of the asset 105, data pertaining to manufacturing of the asset 105, data pertaining to assembling of the asset 105, data pertaining to manufacturing of the asset 105, process specific information, general process information, and any other information related to business requirement may be linked to each other in a defined order. Additionally, the knowledge graph comprises failures and causes of the failures in a linked manner. In an example, a failure in the motor may be linked to reduced lubrication in the rotor, rotor failure may be linked to defects in the bearing and so forth. Additionally, the knowledge graph also includes standard procedure data that may be specific to a process in the asset 105. The standard procedure data includes a set of pre-defined rules, a standard operating procedure, a pre-defined activity or a process, and the like. Furthermore, the knowledge graph also comprises physics-based models for specific processes such as, manufacturing, assembling, testing and operation of the asset 105. Furthermore, the knowledge graph also comprises data pertaining to previously detected anomalies or failures and the actions that were initiated to resolve the previously predicted failures.

At step 410, at least one performance indicator is determined based on the information extracted from the knowledge base 122 and the mapped sensing units 125. Throughout the present disclosure, the term 'performance indicator' as used herein may refer to the parameters that affect the performance of the assets 105 in the technical installation. The term 'performance' as used herein refers to metrics that affect an efficiency, availability or reliability of the asset 105. In the present disclosure, the performance indicators may be overall efficiency, overall availability, overall reliability of the assets 105, or the performance indicators may also define specific indicators for a specific asset such as chiller, pumps, heat exchangers and the like. Such information relating to association between sensing units 125 and assets 105 and performance indicators can be extracted from the knowledge base 122 and then can be used for further analysis. It will be appreciated that the performance indicators for existing assets can be directly mapped using the knowledge base 122 as well as calculated for new assets or new asset category and then updated in the knowledge base 122. Advantageously, the present invention is capable of automatically determining performance indicators to initiate the workflow based on the set of requirements from the user. At the same time, the present invention also enables the capability to calculate performance indicators for new assets and new asset categories such that the new asset can be seamlessly integrated into the system.

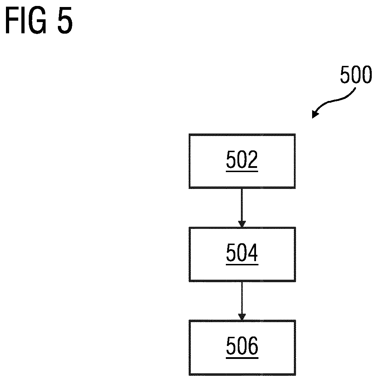

The method for determining performance indicator for an existing asset 105 is explained further in FIG 5. FIG 5 depicts a flowchart of a method 500 for determining at the at least one performance indicator, in accordance with an embodiment of the present invention. At step 502, at least one sensing unit 125 required for calculating the at least one performance indicator is selected. It should be understood that all data from mapped sensing units 125 may not be required for determining a particular performance indicator. Therefore, it is important to intelligently select the sensing units 125 which is crucial for calculation of the determined performance indicator. At step 504, data from the selected at least one sensing unit 125 required for determining the at least one performance indicator is obtained. At step 506, the at least one performance indicator is calculated based on the obtained data.

In an example, let us consider a heat exchanger that is an existing asset in the technical installation. In such a case, the domain knowledge and performance indicator definition are already available in the knowledge base 122. The set of requirements may be to 'determine leakage' and 'determine fouling'. Herein, the processing unit 135 first determines the sensing units that are required for determining performance indicator for the requested analysis and then determines the performance indicators that will be required for the analysis. Table 1 depicts the determined relationship between the set of requirements, performance indicators and required sensing units 125 as shown below:

**Table 1**

| **Requirements** | **Performance indicators (KPIs)** | **Required Sensors** |
|---|---|---|
| Fouling | Fouling factor, overall heat transfer coefficient, efficiency | Flow_hot_in, flow_cold_in, Temperature_hot_in, Temperature_cold_in, Temperature_hot_out, Temperature-cold_out |
| Leakage_hot side | Pressure drop_hot_side, DP_residual_hot | Flow_hot_in, Pressure_hot_in, Pressure_hot_out, |
| Leakage_cold side | Pressure drop_cold_side, DP_residual_cold | flow_cold_in, Pressure_cold_in, Pressure_cold_out |

It will be appreciated that a new asset belonging to the same category of assets may be seamlessly integrated into the technical installation since the method is scalable. Considering the above example of the heat exchanger. Any finite number of new heat exchangers that may be added to the technical installation can be easily integrated into the system as all information, data, metadata, domain knowledge, sensor information, performance indicator information, relationship between heat exchangers and required sensors for different requirements is already known as stored in the knowledge base 122. Hence, for example when 50 new heat exchangers are added, the integration of the new heat exchangers possible without any challenges.

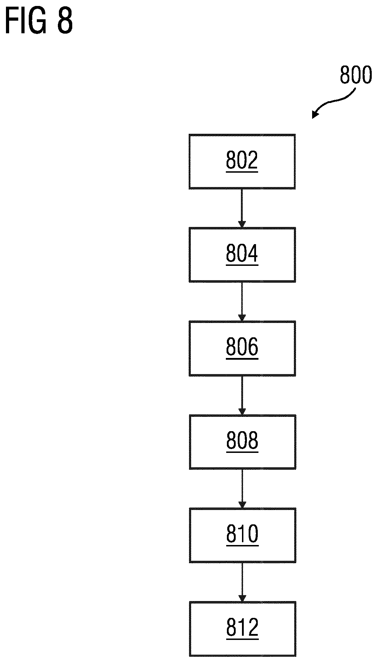

The method for determining performance indicator for a new asset category is explained further in FIG 8. FIG 8 depicts a flowchart of a method 800 for calculating at least one performance indicator when a new asset category is added to the technical installation, in accordance with an embodiment of the present invention. It should be understood that the performance indicator may not be available for the new asset category that is being added to the technical installation and hence performance indicator is to be calculated for such a new asset category. At step 802, the new asset category is mapped to the sensing units 125 associated with the new asset category. Herein, the new asset category may the new asset types that may not be existing the technical installation at a particular time or there is no prior information pertaining to the new asset in the knowledge base. In an example, a new asset category may be pumps, heat exchangers, or any other asset not earlier available in the technical installation. Advantageously, the present invention is capable of automatically identifying that a new asset category has been added to the technical installation and eventually mapping the new asset category to the sensing units 125. The mapping of the new asset category to the sensing unit 125 can be done in a similar fashion as mentioned in FIG 4 at step 406. In an example, the new asset category is mapped to the corresponding sensing units by determining a relationship between the new asset category to the sensing unit using the engineering diagram as acquired from the database. In another example, the operator is prompted to manually map the new asset category to the sensing unit 125 using a graphical user interface on the client device 130.

At step 804, information related to the new asset category is obtained from a database. The information such as new specification, asset related data, parameter information, domain specific information or any other relevant metadata may be obtained from an associated database. In an embodiment, such information may be input manually through a web-based interface. Furthermore, the data from the sensing units 125 associated with the new asset category is also obtained. In an embodiment, the method of obtaining the data from the sensing unit 125 associated with the new asset category comprises establishing a connection between the processing unit 135 and a source of data associated with the sensing unit 125. Herein, the source is an address of the sensing unit 125. Further, the data is obtained from the sensing unit 125 in real-time via the established connection. According to another embodiment, the method of obtaining the data from the sensing unit 125 associated with the new asset category comprises establishing a connection between the processing unit 135 and a source of the data associated with the sensing unit 125. Herein, the source is a database. In an example, the data from the sensing units 125 maybe acquired and stored in the database on a periodic basis. In another example, the data maybe uploaded in the database by the operator for analysis. Further, once the connection is established the data is obtained from the database.

At step 806 knowledge base 122 is updated with the information related to the new asset category. The knowledge base 122 is updated by adding nodes and edges to the knowledge graph when new information is discovered. Advantageously, the knowledge base 122 is updated with the new information acquired for the new asset category such that the knowledge base 122 is continuously learning and establishing new nodes and connections.

At step 808, a set of formula is calculated, wherein the set of formula is a function of the data recevied from the sensing units 125 and known performance indicators. Herein, the set of formula refers to a mathematical statement derived from the data received from the seeing units 125 and the performance indicators that are stored in the knowledge base 122 for other assets. In an example, the set of formula is defined using mathematical operators such as addition, subtraction, multiplication, and division of the parameter values obtained from the sensing units 125. In another example, the set of formula is defined using already known performance indicators (KPIs) known and stored in the knowledge base 122.

For example:
- KPI: Delta Pressure = Pressure_out - Pressure_in is a function of only inlet and outlet pressure sensor
- KPI: Efficiency = fxn (Delta Pressure, Flow, speed) is a function of both computed KPI (Delta Pressure) and sensor variables flow and speed and fxn can be represented by a machine learning model like a neural network.

At step 810, the at least one performance indicator is determined for the new asset category based on the calculated set of formula. Advantageously, the system is capable of automatically calculating the at least one performance indicator for the new asset category and therefore integrate the new asset category into the technical installation in an efficient and accurate manner.

At step 812, knowledge base 122 is re-updated with the determined performance indicator. In an exemplary implementation, let us consider an oil and gas plant where a distillation column is a new asset category that is required to integrated into the oil and gas plant. Advantageously, the distillation column can be added into the asset-base without any changes in the back-end code. In this case, the model template, and the libraries for calculating various performance indicators are not available as this is a new requirement. Therefore, the KPIs need to be added as per the domain know-how of the operator, in particular the user having a developer profile. As a first step, available sensors are added as per the P&ID and equipment datasheets and/or SCADA diagrams. Further, '*Add*_*KPI*' configuration for the distillation column is added in the front-end to initialize a workflow, which adds a KPI and also provides a template in the backend to configure the required set of formula for the distillation column. The required arguments in terms of available sensors may also be added in the backend. Further, the system determines the performance indicator for the distillation column by calculation the set of formula. The performance indicator can be a function of the sensor values or can also be a function of the already selected KPI. Such set of formula can then be integrated within the source code of the distillation column. This also allows easy integration of the distillation column as part of the model library. Once the performance indicator is determined, the *'Add*_*Analytics'*workflow is specified with the target KPIs and the input features. The input features can either be the sensors around the distillation column, or other KPI which is already defined. Subsequently, the model training workflow is added in the backend, where the input features and target variables will already be available.

At step 412, a workflow to be executed is defined based on the determined at least one performance indicator and the set of requirements recevied from the operator. Herein, the term 'workflow' refers to a set of instructions or task set that is required to be executed in order to determine the outcome as requested. Notably, every action in the system is modeled as a workflow. The workflow can be understood as an entry point to the backend of the system. The workflow is defined and initiated for the asset 105. The workflow may comprise one or more tasks for each of the plurality of assets 105. In an embodiment, task is at least one of: anomaly detection in the asset 105, root cause analysis of the asset 105, remaining useful life estimation of the asset 105, performance optimization of the asset 105, forecasting of one or more parameters associated with the asset 105 and energy optimization of the asset 105. The one or more tasks may vary for different assets and different technical installations based on the requirements. In one example, when the technical installation is a building, the task may be forecasting load, forecasting temperature, forecasting humidity, and so forth. Once the workflow is defined as per the requirement, the workflow is submitted for execution. Examples of workflow may inlcude, but not limited to, 'Training only', 'Deploy Only', 'Train and Deploy', and 'Test'. Advantageously, defining the workflow allows seamless deployment of the models on an edge device (where the models are trained elsewhere), or directly on an on-premises server where the models can be trained at the customer site-itself. Similarly, the same workflows can be executed on the cloud. This allows flexibility in terms of deployment and model management.

At step 414, a configured machine learning model is selected from a set of machine learning models based on the defined workflow. Herein, the set of machine learning models comprises one or more machine learning models configured for determining an outcome of a specific task. The term 'machine learning model' as used herein refers to a prediction model given a set of training dataset. In general, each individual sample of the training data is a pair containing a dataset (e.g., operating conditions of the asset 105 and corresponding parameter values of the asset 105) and a desired output value or dataset (e.g., parameter values of the asset 105). The machine learning model analyzes the training data and produces a predictor function. The predictor function, once derived through training, is capable of reasonably predicting or estimating the correct output value or dataset.

Exemplary machine learning models may include artificial intelligence model such as deep neural network, convolutional neural network, LSTM models and the like.

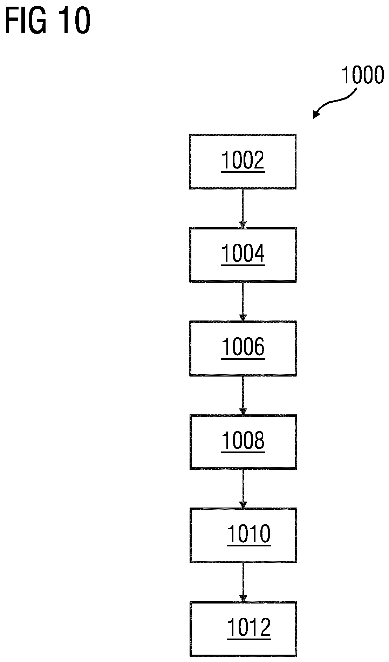

Herein, the 'configured machine learning model' refers to any machine learning model that is configured or trained for determining an outcome of a specific task such as anomaly detection in the asset, root cause analysis of the asset 105, remaining useful life estimation of the asset 105, performance optimization of the asset 105, forecasting of parameters associated with the asset 105, and energy optimization of the asset. Notably, the set of machine learning models in stored in the database in the back-end of the server. Advantageously, the system is capable of automatically determining the configured machine learning model from the set of machine learning models in order to determine the outcome as requested. Furthermore, it will be appreciated that there is minimal need for the users to understand the underlying source code or require coding skills to execute the workflow and determine outcome from the selected machine learning models. In an embodiment, the system intelligently selects the configured machine learning model and determine the outcome. In another embodiment, system allows the user with a developer profile to train the machine learning model or configure/ reconfigure the machine learning model as per their knowledge and expertise. This may be a case when new machine learning models are to be added in the system. Such a method for a new machine learning model to the set of machine learning models in explained further in FIG 10.

FIG 10 depicts a flowchart of a method 1000 for adding a new machine learning model to the set of machine learning models, in accordance with an embodiment of the present invention. At step 1002, data related to the asset 105 for which new machine learning model is to be added is obtained. Herein, the data is stored in the database. The asset 105 may be an existing asset or a new asset doe the new machine learning model is to be added. The data may be condition data, operation data, specification data, parameter data, historical data and the like that may be required for training the new machine learning model. In an example, the data is synthetic data that is designed using design of experiments (DOE) technique. The synthetic data maybe required for new assets where data for training the new machine learning model is not available. In another example, the data is historical data as collected over a period of time for the asset. The historical data maybe used for existing assets.

At step 1004, the new machine learning model is trained using the data obtained from the database. In an example, the new machine learning model is trained on synthetic data in case of new assets. In another example, the new machine learning model is trained on historical data in case of existing assets. The training of the new machine learning model may be done using techniques used in the art. It will be appreciated that new machine learning model can be configured by adding, subtracting, or modifying the architecture such as layers or number of nodes per layer of the new machine learning model based on the requirement of the task and the workflow requested.

Further, the new machine learning model can be configured to adjust the weights of the nodes in the new machine learning model in order to achieve the requested task. For example, if the user had requested to calculate remaining useful life (RUL) for a chiller which was not existing before in the system, then a new machine learning model for calculating the RUL for the chiller is configured and trained for the RUL estimation of chiller. Advantageously, the system allows the user with developer profile to the new machine learning model as per the requirement.

At step 1006, an accuracy of the new machine learning model is determined. Herein, the accuracy of the machine learning embodiment can be determined by testing the new machine learning model using a test dataset. In an embodiment, the accuracy of the machine learning model can be determined by executing the new machine learning model in a simulation environment. The simulation environment may include a digital twin of the asset 105 and then the accuracy of the new machine learning algorithm is determined based on the results of the simulation instances. Herein, the term 'digital twin' as used herein refers to a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on. The digital twin interacts with the knowledge base 122 to generate simulation instances and determine the accuracy of the new machine learning model.

At step 1008, adding the new machine learning model to the set of machine learning model related to the asset 105 for a specific task if the accuracy of the new machine learning model is above a third predefined threshold value. The third predefined threshold value may be a quantifiable threshold value set by the operator depending upon the task for which the new machine learning model is to be configured. When the accuracy of the new machine learning model as derived from the testing data or the results of the simulation environment, then a comparison is made with the third predefined threshold value. If the accuracy of the new machine learning model is above the third predefined threshold value, then the new machine learning is added to the set of machine learning models, for example in the AI model library. If the accuracy of the new machine learning model is below the third predefined threshold value, then the new machine learning model is re-trained until a desired accuracy is achieved.

Referring back to FIG 4, at step 416, an outcome of the selected machine learning model is determined based on the received set of requirements. Herein, the outcome of the selected machine learning model is a function of the determined at least one performance indicator of the one or more assets 105. The outcome of the selected machine learning model may be the outcome of the specific task as requested. In an embodiment, the outcome may be pertaining to a specific task such as anomaly detection in the asset 105, root cause analysis of the asset 105, remaining useful life estimation of the asset 105, performance optimization of the asset 105, forecasting of one or more parameters associated with the asset 105, and energy optimization of the asset. The determined outcome is a function of the determined at least one performance indicator of the one or more assets 105. In an example, the efficiency in a motor will be determined based on the performance indicators of the motor such as current values, voltage values, torque, power, load and so forth.

In an embodiment, the outcome of the selected machine learning model is presented on the client device 130 for managing the plurality of assets 105 in the technical installation. In an embodiment, the method further comprises determining updated outcome from the selected machine learning model based on the received updated set of requirements. Further, the method comprises presenting the updated outcome on the client device 130. It will be appreciated that the set of requirements that are input to the system maybe varied by the user to visualize different outcomes on the client device 130 based on varied input parameters as received. Notably, this technique enables the system to perform a sensitivity analysis on a particular workflow. Advantageously, the sensitivity analysis aids the users (such as plant operators) to understand the impact of various parameter variables on the performance of one or more assets 105. In an example, the performance of an asset 105 such as the efficiency(%) is captured through performance indicators such as input liquor carbon dioxide, input liquor ammonia, sea water flow etc. Therefore, by varying the input features of the performance indicators, the users have the ability to understand how variations in a particular input feature ( e.g. performance indicators) affects the target feature (e.g. efficiency of the asset). Advantageously, the ability to analyze and visualize the sensitivity of the input parameters on the asset 105 ensures that the user is able to make an informed decision about the one or more parameter values that will ensure optimum values for the respective performance indicators and hence the performance of the overall asset or technical installation.

In an exemplary implementation, the asset 105 is a carbonation tower. The carbonation tower may have the following variables as the input features such as input liquor carbon dioxide, input liquor ammonia, sea water flow, chilled water flow, bottom gas flow, middle gas flow, sea water inlet temperature, chilled water inlet temperature, and output liquor flow, and so forth. The system is able to predict the efficiency of the carbonation tower. The user may enter several parameter value combinations as input features to observe the sensitivity of the features on the efficiency of the carbonation tower. For this purpose, the user is provided with a graphical user interface (GUI) to input the parameter values and visualize the changes on the GUI in real-time. The user may be provided with input interfaces such as a slider, a knob, a manual entry box etc to select the value of each parameter within the operating ranges. Upon changing any of these parameters, sensitivity plots with the input feature versus output feature are presented on the client device 130.

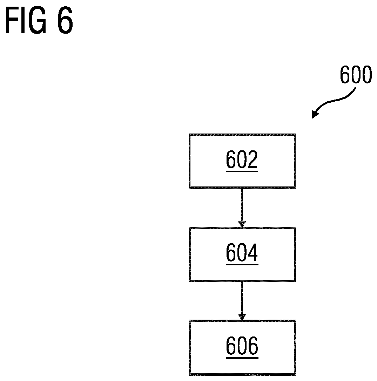

The method of determining outcome for the selected machine learning model for an existing asset 105, for a new asset 105 and for a new asset category 105 is explained later in detail in FIG 6, FIG 7 and FIG 9 respectively.

FIG 6 depicts a flowchart of a method 600 for determining the outcome of the selected machine learning model, in accordance with an embodiment of the present invention. At step 602, the one or more coefficients of the selected machine learning model are tuned using the data received from the at least one sensing unit and the extracted information. In particular, the weights of the nodes in different layers of the machine learning model are modified in order to adjust the outcome of the machine learning model as desired. It will be appreciated that the selected machine learning model that is preconfigured for a specific task such as predicting anomalies in an asset 105 is not used as fixed solution for all assets. Beneficially, the prediction model is tuned to improve accuracy of the selected machine learning model for the asset 105. In one example, the selected machine learning model may be trained further on the data received from the at least one sensing unit 105 associated with the asset 105 that is required for determining the performance indicator.

At step 604, an accuracy of the tuned machine learning model is determined based on the recevied set of requirements. The sensitivity of accuracy of the outcome can be set by the operator based on the requirements. For example, the accuracy for manufacturing or processing of hazardous material in a factory will be greater than that of manufacturing clothes in a factory. Accordingly, the accuracy of the machine learning model may be set by the operator or by the system itself. The accuracy of the tuned machine learning model may be determined by testing the tuned machine learning with a test dataset or by executing the tuned machine learning model in a simulation environment as explained earlier. At step 606, the outcome of the tuned machine learning model is determined if the accuracy of the tuned machine learning model is above a first predefined threshold value. The first predefined threshold value may depend on the sensitivity and criticality of the requirement. The first predefined threshold may be defined by the system or manually based on the set of requirements. In a case when the accuracy of the tuned machine learning model is above the first predefined threshold value the tuned machine learning model is run and the outcome such as forecast of different parameter values, efficiency of assets, maintenance schedules, detected faults, RCA of faults and so forth is displayed on the display device 130 as requested.

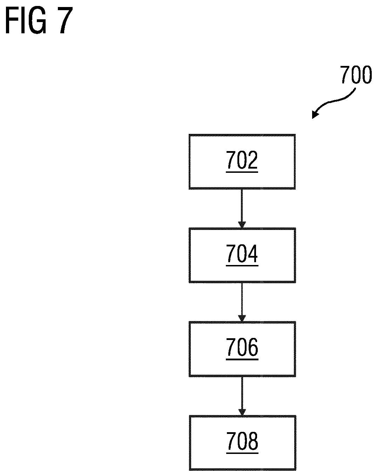

FIG 7 depicts a flowchart of a method 700 for determining the outcome of the selected machine learning model when a new asset 105 is added to the technical installation, in accordance with an embodiment of the present invention. At step 702, the new asset 105 is mapped to the sensing units 125 associated with new asset 105. The mapping of the new asset 105 to the sensing unit 125 can be done in a similar fashion as mentioned in FIG 4 at step 406. In an example, the new asset 105 is mapped to the corresponding sensing units by determining a relationship between the new asset to the sensing unit using the engineering diagrams as acquired from the database. In another example, the operator is prompted to manually map the new asset 105 to the sensing unit 125 using a graphical user interface on the client device 130. At step 704, the new sensing units 125 are selected that are required for determining the at least one performance indicator. It should be understood that all data from mapped sensing units 125 may not be required for determining a particular performance indicator. Therefore, it is important to intelligently select the new sensing units 125 which may be essential for determination of the determined performance indicator. The performance indicator for the new asset 105 may be obtained from the knowledge base 122 based on a similarity between the new asset and same category assets existing in the knowledge base 122 that are already integrated in the system.

At step 706, the coefficients of the selected machine learning model are re-tuned based on the data obtained from the new sensing units. The data may be condition data, operation data, specification data, parameter data, historical data and the like that may be required for re-training the selected machine learning model. In an example, the data is historical data as collected over a period of time for the asset 105 which is used for re-training the machine learning model for the new asset 105. At step 708, determining the outcome of the re-tuned machine learning model when the new asset 105 is added. Advantageously, the invention is capable of scaling the outcome of the machine learning model to a large number of assets (for example same category assets) that are to be integrated into the system without re-determining the entire workflow. The machine learning model is re-tuned according to the data recevied from the new sensing units 125 and therefore the re-tuned machine learning model is capable of determining the outcome for new added assets 105 as well.

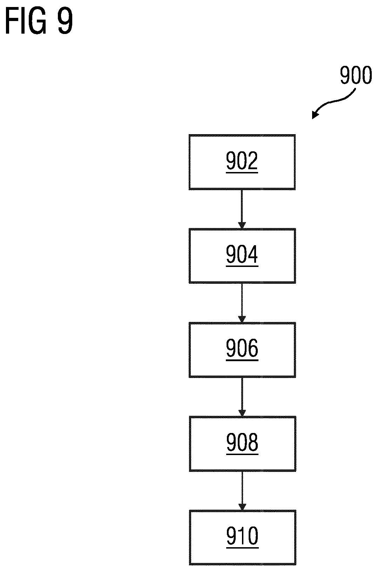

FIG 9 depicts a flowchart of a method 900 for determining an outcome of the machine learning model for new asset category, in accordance with an embodiment of the present invention. At step 902, a new workflow is determined for the new asset category to be executed based on the determined at least one performance indicator. The method of determining the at least one performance indicator for the new asset category is explained earlier in FIG 8. Since the workflow can be understood as an entry point to the backend of the system, the new workflow is to be defined and initiated for the new asset category. Herein, the new asset category may the new asset types that may not be existing the technical installation at a particular time or there is no prior information pertaining to the new asset category 105 in the knowledge base 122. In an example, the new asset category may be pumps, heat exchangers, or any other asset not earlier available in the technical installation. It is essential to define a new workflow for the new asset category based on the set of requirements and the performance indicator as determined in FIG 8. The workflow may comprise one or more tasks for each of the plurality of assets 105. In an embodiment, task is at least one of: anomaly detection in the asset 105, root cause analysis of the asset 105, remaining useful life estimation of the asset 105, performance optimization of the asset 105, forecasting one or more parameters associated with the asset 105, and energy optimization of the asset 105. Once the workflow is defined as per the requirement, the workflow is submitted for execution. Examples of workflow may inlcude, but not limited to, "Training only", "Deploy Only", "Train and Deploy", and "Test".

At step 904, a configured machine learning model is selected from the set of machine learning models based on the new determined workflow. Herein, the 'configured machine learning model' refers to any machine learning model that is configured or trained for determining an outcome of a specific task such as anomaly detection in the asset 105, root cause analysis of the asset 105, remaining useful life estimation of the asset 105, performance optimization of the asset 105, forecasting one or more parameters associated with the asset 105, and energy optimization of the asset 105. Advantageously, the system is capable of automatically determining the configured machine learning model from the set of machine learning models in order to determine the outcome as requested.

At step 906, one or more coefficients of the configured machine learning model are tuned using the data received from the at least one sensing unit and the data from the knowledge base 122. In particular, the weights of the nodes in different layers of the machine learning model are modified in order to adjust the outcome of the machine learning model as desired in the new workflow.

At step 908, an accuracy of the tuned machine learning model is determined for the new asset category based on the set of requirements. The sensitivity of accuracy of the outcome can be set by the operator based on the requirements. For example, the accuracy for manufacturing or processing of hazardous material in a factory will be greater than that of manufacturing clothes in a factory. Accordingly, the accuracy of the machine learning model may be set by the operator or by the system itself. The accuracy of the tuned machine learning model may be determined by testing the tuned machine learning with a test dataset or by executing the tuned machine learning model in a simulation environment as explained earlier.

At step 910, the outcome of the tuned machine learning model for the new asset category is determined if the accuracy of the tuned machine learning model is above a second predefined threshold value. The second predefined threshold value may depend on the sensitivity and criticality of the requirement. The second predefined threshold may be defined by the system or manually based on the set of requirements. In a case when the accuracy of the tuned machine learning model for the new asset category is above the second predefined threshold value the tuned machine learning model is run and the outcome such as forecast of different parameter values, efficiency of assets, maintenance schedules, detected faults, root cause analysis (RCA) of detected faults and so forth is displayed on the display device 130 as requested.

The present invention aims to integrate domain knowledge, artificial intelligence expertise, predictive analytics in a flexible, reliable, and scalable manner. The invention enables users to realize high quality predictive analytics solution in a time efficient manner. Beneficially, the present invention allows the user to seamlessly configure assets, select relevant assets, define performance indicators, define workflows, select machine learning models, configure, and train machine learning models and determine a desired outcome as requested by the user. It will be appreciated that the present invention integrates domain knowledge and historic information into the system by generation a knowledge graph and continuously updating the same. In other words, the front-end configurator is embedded with the knowledge of the assets being configured. This allows one-shot configuration of the complete asset without going back-and forth between the front-end and back-end- hence reducing the overall development effort significantly.

Furthermore, the present invention executes workflows and runs tasks such as anomaly detection, parameter forecasting, training AI models, storing AI models, updating knowledge base and so forth in a time efficient manner with minimal intervention from a software code/ AI/ML expert. The present invention allows training as well as retraining of AI models. The simulation model or the AI model simulator is empowered with synthetic data can be used to spawn and test a new asset, thus providing the user access to the final solution in minimal time. Beneficially, the present invention allows users to either create a new workflow or modify an existing workflow as designed by the system based on available template workflows. It will be appreciated that the embodiments of the present invention enable the user to either define the entire new workflow based on the requirement of the user or scale-up the existing workflow based on the requirement in an efficient manner. In other words, the present invention enables integration of existing assets and new assets into the system in a seamless manner. Advantageously, the present invention reduces cost, increases accuracy and is time efficient.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of the appended claims.

### List of reference numbers:

- 100: system for managing plurality of assets
- 105: assets
- 110: apparatus
- 115: edge device
- 120: network
- 122: knowledge base
- 125: sensing units
- 130: client device/ user device
- 135: processing unit
- 140: memory unit
- 145: storage unit
- 150: database
- 155: input unit
- 160: output unit
- 165: asset management module
- 170: data acquisition module
- 175: asset mapping module
- 180: asset mapping module
- 182: performance indicator determination module
- 185: workflow definition module
- 190: machine learning model selection module
- 192: output module
- 195: bus
- 200: block diagram f an architecture of the system
- 202: predictive analytics engine user interface layer
- 204: predictive analytics engine backend layer
- 206: predictive analytics engine backend layer
- 208: data storage layer
- 210: communication layer
- 212: data collection layer
- 214: AI model library module
- 216: AI model trainer module
- 218: AI model simulator module
- 220: AI workflow manager module
- 222: system administration module
- 224: AI model library module
- 226: AI model trainer module
- 228: AI model simulator module
- 230: AI workflow manager module
- 232: system administration module
- 234: KPI calculator module
- 236: data cleaning module
- 238: data structuring module
- 240: data normalization module
- 242: knowledge base
- 244: mongoDB
- 246: time series database
- 248: OPC UA module
- 250: TCP/IP module
- 252: MQTT module
- 254: chillers
- 256: pumps
- 258: HVAC
- 260: PLC
- 262: exhaust fans
- 300: block diagram of an architecture of the system
- 302: plurality of assets
- 302A: pumps
- 302B: oil wells
- 302C: heat exchanger
- 302D: HVAC
- 302E: chillers
- 302N: motor
- 304: server
- 306: user interface (UI) layer
- 308: backend layer
- 310: business connector layer
- 312: navigation application
- 314: application framework
- 316: graphics frameworks
- 318: angular frameworks
- 320: programming language specific suite
- 322: programming language specific editor
- 324: AI model training module
- 326: AI model simulation module
- 328: AI model prediction module
- 330: Workflow manager module
- 332: knowledge graph module
- 334: admin module
- 336: navigation module
- 338: database access API
- 340: security API
- 342: other APIs
- 344: communication protocol access API
- 346: Mongo database
- 348: influx database
- 350: communication module
- 352: OPC/UA module
- 354: TCP/IP module 354
- 356: MQTT module
- 358: communication protocol module
- 400: method for managing a plurality of assets in a technical installation
- 500: method for determining at the at least one performance indicator
- 600: method for determining the outcome of the selected machine learning model
- 700: method for determining the outcome of the selected machine learning model when a new asset is added to the technical installation
- 800: method for calculating at least one performance indicator when a new asset category is added to the technical installation
- 900: method for determining an outcome of the machine learning model for new asset category
- 1000: method for adding a new machine learning model to the set of machine learning models

## Claims

1. A method (400) for managing a plurality of assets (105, 302A-N) in a technical installation, the method comprising:
receiving, by a processing unit (135), a set of requirements for managing the plurality of assets (105, 302A-N);
selecting, by the processing unit (135), one or more assets (105, 302A-N) from the plurality of assets (105, 302A-N) based on the received set of requirements;
mapping, by the processing unit (135), the one or more assets (105, 302AN) to corresponding sensing units (125), wherein the mapping of the one or more assets (105, 302A-N) to the corresponding at least one sensing unit (125) comprises:
determining a relationship between the assets (105, 302A-N) and sensing unit (125) using engineering data; and
mapping the assets (105, 302A-N) to sensing unit (125) based on the determined relationship;
extracting, by the processing unit (135), information associated with the selected one or more assets (105, 302A-N) and the received set of requirements, wherein the information comprises domain knowledge stored in a knowledge base (122);
determining, by the processing unit (135), at least one performance indicator based on the information extracted from the knowledge base (122) and the mapped sensing units (125), wherein determining the at least one performance indicator comprises:
selecting, by the processing unit (135), at least one sensing unit (125) required for calculating the at least one performance indicator;
obtaining, by the processing unit (135), data from the selected at least one sensing unit (125) required for determining the at least one performance indicator; and
calculating the at least one performance indicator based on the obtained data;
defining, by the processing unit (135), a workflow to be executed on the asset (105, 302A - N) based on the determined at least one performance indicator;
selecting, by the processing unit (135), a configured machine learning model from a set of machine learning models based on the defined workflow, wherein the set of machine learning models comprises one or more machine learning models configured for determining an outcome of a specific task, the machine learning model being a model for determining an outcome of a specific task given a set of training dataset;
determining, by the processing unit (135), an outcome of the selected machine learning model based on the received set of requirements, wherein the outcome of the selected machine learning model is a function of the determined at least one performance indicator of the selected one or more assets (105, 302A-N).

2. The method (400) according to claim 1, further comprising presenting the determined outcome on a client device (130) for managing the plurality of assets (105, 302A-N) in the technical installation.

3. The method (400) according to claim 1, further comprising:
receiving, by the processing unit (135) an updated set of requirements;
determining an updated outcome from the selected machine learning model based on the received updated set of requirements;
presenting the updated outcome on the client device.

4. The method (400) according to claim 1, further comprising generating user profiles for one or more users associated with the client device (130), wherein the each of the user profile is associated with a set of functionalities accessible by the user.

5. The method (600) according to claim 1, wherein determining the outcome of the selected machine learning model comprises:
tuning one or more coefficients of the selected machine learning model using the data received from the at least one sensing unit (125) and the extracted information;
determining an accuracy of the tuned machine learning model based on the received set of requirements;
determining the outcome of the tuned machine learning model if the accuracy of the tuned machine learning model is above a first predefined threshold value.

6. The method (700) according to claim 1, further comprises determining the outcome of the selected machine learning model when a new asset (105) is added to the technical installation, wherein determining the outcome of the selected machine learning model comprises:
mapping the new asset (105) to the sensing units (125) associated with new asset (105);
selecting the new sensing units (125) that required for determining the at least one performance indicator;
re-tuning the coefficients of the selected machine learning model based on the data obtained from the new sensing units (125); and
determining the outcome of the re-tuned machine learning model when the new asset (105) is added to the technical installation.

7. The method (800) according to claim 1, further comprises calculating at least one performance indicator when a new asset category (105) is added to the technical installation, wherein calculating the at least one performance indicator comprises:
mapping the new asset category (105) to the sensing units (125) associated with the new asset category (105);
obtaining information related to the new asset category (105) from a database (150);
updating the knowledge base (122) with the information related to the new asset category (105);
calculating a set of formula, wherein the set of formula is a function of the data received from the sensing units (125) and known performance indicators;
determining the at least one performance indicator for the new asset category (105) based on the calculated set of formula;
re-updating the knowledge base (122) with the determined performance indicator.

8. The method (900) according to claim 5, further comprising determining an outcome of the machine learning model for new asset category (105), wherein determining the outcome comprises:
determining a new workflow for the new asset category (105) to be executed based on the determined at least one performance indicator;
selecting a configured machine learning model from the set of pre-configured machined learning models based on the new determined workflow;
tuning one or more coefficients of the configured machine learning model using the data received from the at least one sensing unit (125) and the domain knowledge from the knowledge base (122);
determining an accuracy of the machine learning model tuned for the new asset category (105) based on the set of requirements;
determining the outcome of the machine learning model tuned for the new asset category (105) if the accuracy of the tuned machine learning model is above a second predefined threshold value.

9. The method (1000) according to claim 1, further comprising adding a new machine learning model to the set of machine learning models, wherein adding the new machine learning model comprises:
obtaining data related to the asset (105, 302A-N) for which new machine learning model is to be added, wherein the data is stored in the database (150);
training the new machine learning model using the data obtained from the database (150);
determining an accuracy of the new machine learning model;
adding the new machine learning model to the set of machine learning model related to the asset (105, 302A-N) for a specific task if the accuracy of the new machine learning model is above a third predefined threshold value.

10. The method (400) according to any of the preceding claims, wherein the task is at least one of: anomaly detection in the asset (105, 302A-N), root cause analysis of the asset (105, 302A-N), remaining useful life estimation of the asset (105, 302A-N), forecasting of the parameters associated with the asset (105, 302A-N), performance optimization of the asset (105, 302A-N), and energy optimization of the asset (105, 302A-N).

11. The method according to claim 1, further comprising automatically updating the mapping between the asset (105, 302A-N) and the sensing unit (125) in real-time when the sensing unit (125) is online.

12. An apparatus (110) for managing a plurality of assets (105, 302A-N) in a technical installation, the apparatus (110) comprising:
one or more processing units (135); and
a memory unit (140) communicatively coupled to the one or more processing units (135), wherein the memory unit (140) comprises an asset management module (165) stored in the form of machine-readable instructions executable by the one or more processing units (135), wherein the asset management module (165) is configured to perform method steps according to any of the claims 1 to 11.

13. A system (100) for managing a plurality of assets (105, 302A-N) in a technical installation, the system comprising:
one or more devices (130) configured for providing set of requirements for managing the plurality of assets (105, 302A-N);
one or more sensing units (125) for providing data associated with the plurality of assets (105, 302A-N);
a knowledge base (122) comprising domain knowledge related to the plurality of assets (105, 302A-N); and
an apparatus (110) according to claim 12, communicatively coupled to the one or more devices (130), wherein the apparatus (110) is configured for managing the plurality of assets (105, 302A-N) based on the set of requirements, according to any of the method claims 1 to 11.

14. A computer-program product having machine-readable instructions stored therein, which when executed by one or more processing units (135), cause the processing units (135) to perform a method according to any of the claims 1 to 11.

## Patentansprüche

1. Verfahren (400) zum Verwalten mehrerer Anlagen (105, 302A-N) in einer technischen Installation, wobei das Verfahren umfasst:
Empfangen, durch eine Verarbeitungseinheit (135), eines Anforderungssatzes für die Verwaltung der mehreren Anlagen (105, 302A-N);
Auswählen, durch die Verarbeitungseinheit (135), einer oder mehrerer Anlagen (105, 302A-N) aus den mehreren Anlagen (105, 302A-N) basierend auf dem empfangenen Anforderungssatz;
Zuordnen, durch die Verarbeitungseinheit (135), der einen oder mehreren Anlagen (105, 302A-N) zu entsprechenden Erfassungseinheiten (125), wobei das Zuordnen der einen oder mehreren Anlagen (105, 302A-N) zu der entsprechenden mindestens einen Erfassungseinheit (125) umfasst:
Bestimmen einer Beziehung zwischen den Anlagen (105, 302A-N) und der Erfassungseinheit (125) mithilfe von Konstruktionsdaten; und
Zuordnen der Anlagen (105, 302A-N) zur Erfassungseinheit (125) basierend auf der bestimmten Beziehung;
Extrahieren, durch die Verarbeitungseinheit (135), von Informationen, die mit den ausgewählten ein oder mehreren Anlagen (105, 302A-N) und dem empfangenen Anforderungssatz verknüpft sind, wobei die Informationen in einer Wissensdatenbank (122) gespeichertes Domänenwissen umfassen;
Bestimmen, durch die Verarbeitungseinheit (135), mindestens eines Leistungsindikators basierend auf den aus der Wissensdatenbank (122) extrahierten Informationen und den zugeordneten Erfassungseinheiten (125), wobei das Bestimmen des mindestens einen Leistungsindikators umfasst:
Auswählen, durch die Verarbeitungseinheit (135), mindestens einer Erfassungseinheit (125), die zum Berechnen des mindestens einen Leistungsindikators erforderlich ist;
Erhalten, durch die Verarbeitungseinheit (135), von Daten von der ausgewählten mindestens einen Erfassungseinheit (125), die zur Bestimmung des mindestens einen Leistungsindikators erforderlich sind; und
Berechnen des mindestens einen Leistungsindikators basierend auf den erhaltenen Daten;
Definieren, durch die Verarbeitungseinheit (135), eines auf der Anlage (105, 302A-N) auszuführenden Arbeitsablaufs basierend auf dem bestimmten mindestens einen Leistungsindikator;
Auswählen, durch die Verarbeitungseinheit (135), eines konfigurierten Maschinenlernmodells aus einem Satz von Maschinenlernmodellen basierend auf dem definierten Arbeitsablauf, wobei der Satz von Maschinenlernmodellen ein oder mehrere Maschinenlernmodelle umfasst, die zum Bestimmen eines Ergebnisses einer bestimmten Aufgabe ausgelegt sind, wobei das Maschinenlernmodell ein Modell zum Bestimmen eines Ergebnisses einer bestimmten Aufgabe mit einem gegebenen Satz von Trainingsdatensätzen ist;
Bestimmen, durch die Verarbeitungseinheit (135), eines Ergebnisses des ausgewählten Maschinenlernmodells basierend auf dem empfangenen Anforderungssatz, wobei das Ergebnis des ausgewählten Maschinenlernmodells eine Funktion des bestimmten mindestens einen Leistungsindikators der ausgewählten einen oder mehreren Anlagen (105, 302A-N) ist.

2. Verfahren (400) nach Anspruch 1, ferner umfassend das Darstellen des bestimmten Ergebnisses auf einer Client-Vorrichtung (130) zum Verwalten der mehreren Anlagen (105, 302A-N) in der technischen Installation.

3. Verfahren (400) nach Anspruch 1, ferner umfassend:
Empfangen, durch die Verarbeitungseinheit (135), eines aktualisierten Anforderungssatzes;
Bestimmen eines aktualisierten Ergebnisses aus dem ausgewählten Maschinenlernmodell basierend auf dem empfangenen aktualisierten Anforderungssatz;
Darstellen des aktualisierten Ergebnisses auf der Client-Vorrichtung.

4. Verfahren (400) nach Anspruch 1, ferner umfassend das Erzeugen von Benutzerprofilen für einen oder mehrere Benutzer, die mit der Client-Vorrichtung (130) verknüpft sind, wobei jedes Benutzerprofil mit einem Satz von Funktionalitäten verknüpft ist, auf die der Benutzer zugreifen kann.

5. Verfahren (600) nach Anspruch 1, wobei das Bestimmen des Ergebnisses des ausgewählten Maschinenlernmodells umfasst:
Abstimmen eines oder mehrerer Koeffizienten des ausgewählten Maschinenlernmodells mithilfe der von der mindestens einen Erfassungseinheit (125) erhaltenen Daten und der extrahierten Informationen;
Bestimmen einer Genauigkeit des abgestimmten Maschinenlernmodells basierend auf dem erhaltenen Anforderungssatz;
Bestimmen des Ergebnisses des abgestimmten Maschinenlernmodells, wenn die Genauigkeit des abgestimmten Maschinenlernmodells über einem ersten vordefinierten Schwellenwert liegt.

6. Verfahren (700) nach Anspruch 1, ferner umfassend das Bestimmen des Ergebnisses des ausgewählten Maschinenlernmodells, wenn eine neue Anlage (105) zu der technischen Installation hinzugefügt wird, wobei das Bestimmen des Ergebnisses des ausgewählten Maschinenlernmodells umfasst:
Zuordnen der neuen Anlage (105) zu den Erfassungseinheiten (125), die mit der neuen Anlage (105) verknüpft sind;
Auswählen der neuen Erfassungseinheiten (125), die zum Bestimmen des mindestens einen Leistungsindikators erforderlich sind;
Neuabstimmen der Koeffizienten des ausgewählten Maschinenlernmodells basierend auf den von den neuen Erfassungseinheiten (125) erhaltenen Daten; und
Bestimmen des Ergebnisses des neu abgestimmten Maschinenlernmodells, wenn die neue Anlage (105) zur technischen Installation hinzugefügt wird.

7. Verfahren (800) nach Anspruch 1, ferner umfassend das Berechnen mindestens eines Leistungsindikators, wenn eine neue Anlagenkategorie (105) zu der technischen Anlage hinzugefügt wird, wobei das Berechnen des mindestens einen Leistungsindikators umfasst:
Zuordnen der neuen Anlagenkategorie (105) zu den Erfassungseinheiten (125), die mit der neuen Anlagenkategorie (105) verknüpft sind;
Erhalten von Informationen in Bezug auf die neue Anlagenkategorie (105) aus einer Datenbank (150);
Aktualisieren der Wissensdatenbank (122) mit den Informationen in Bezug auf die neue Anlagenkategorie (105);
Berechnen eines Formelsatzes, wobei der Formelsatz eine Funktion der von den Erfassungseinheiten (125) empfangenen Daten und bekannten Leistungsindikatoren ist;
Bestimmen des mindestens einen Leistungsindikators für die neue Anlagenkategorie (105) basierend auf dem berechneten Formelsatz;
erneutes Aktualisieren der Wissensdatenbank (122) mit dem bestimmten Leistungsindikator.

8. Verfahren (900) nach Anspruch 5, ferner umfassend das Bestimmen eines Ergebnisses des Maschinenlernmodells für eine neue Anlagenkategorie (105), wobei das Bestimmen des Ergebnisses umfasst:
Bestimmen eines neuen Arbeitsablaufs für die neu auszuführende Anlagenkategorie (105) basierend auf dem bestimmten mindestens einen Leistungsindikator;
Auswählen eines konfigurierten Maschinenlernmodells aus dem Satz von vorkonfigurierten Maschinenlernmodellen basierend auf dem neu bestimmten Arbeitsablauf;
Abstimmen eines oder mehrerer Koeffizienten des konfigurierten Maschinenlernmodells mithilfe der von der mindestens einen Erfassungseinheit (125) erhaltenen Daten und dem Domänenwissen aus der Wissensdatenbank (122);
Bestimmen einer auf die neue Anlagenkategorie (105) abgestimmten Genauigkeit des Maschinenlernmodells basierend auf dem Anforderungssatz;
Bestimmen des Ergebnisses des Maschinenlernmodells, das für die neue Anlagenkategorie (105) abgestimmt ist, wenn die Genauigkeit des abgestimmten Maschinenlernmodells über einem zweiten vordefinierten Schwellenwert liegt.

9. Verfahren (1000) nach Anspruch 1, ferner umfassend das Hinzufügen eines neuen Maschinenlernmodells zu dem Satz von Maschinenlernmodellen, wobei das Hinzufügen des neuen Maschinenlernmodells umfasst:
Erhalten von Daten in Bezug auf die Anlage (105, 302A-N), für die ein neues Maschinenlernmodell hinzugefügt werden soll, wobei die Daten in der Datenbank (150) gespeichert sind;
Trainieren des neuen Maschinenlernmodells mithilfe der Daten aus der Datenbank (150);
Bestimmen einer Genauigkeit des neuen Maschinenlernmodells;
Hinzufügen des neuen Maschinenlernmodells zu dem Satz von Maschinenlernmodellen, die mit der Anlage (105, 302A-N) für eine bestimmte Aufgabe verknüpft sind, wenn die Genauigkeit des neuen Maschinenlernmodells über einem dritten vordefinierten Schwellenwert liegt.

10. Verfahren (400) nach einem der vorhergehenden Ansprüche, wobei die Aufgabe mindestens eine der folgenden ist: Erkennen von Anomalien in der Anlage (105, 302A-N), Ursachenanalyse der Anlage (105, 302A-N), Schätzen der Restnutzungsdauer der Anlage (105, 302A-N), Prognostizieren der mit der Anlage (105, 302A-N) verknüpften Parameter, Leistungsoptimierung der Anlage (105, 302A-N) und Energieoptimierung der Anlage (105, 302A-N).

11. Verfahren nach Anspruch 1, ferner umfassend das automatische Aktualisieren der Zuordnung zwischen der Anlage (105, 302A-N) und der Erfassungseinheit (125) in Echtzeit, wenn die Erfassungseinheit (125) online ist.

12. Einrichtung (110) zum Überwachen des Zustands von Anlagen (105, 302AN) in einer technischen Installation, wobei die Einrichtung (110) umfasst:
eine oder mehrere Verarbeitungseinheiten (135); und
eine Speichereinheit (140), die kommunikativ mit der einen oder den mehreren Verarbeitungseinheiten (135) gekoppelt ist, wobei die Speichereinheit (140) ein Anlagenverwaltungsmodul (165) umfasst, das in Form von maschinenlesbaren Anweisungen gespeichert ist, die durch die eine oder die mehreren Verarbeitungseinheiten (135) ausführbar sind, wobei das Anlagenverwaltungsmodul (165) dazu ausgelegt ist, die Verfahrensschritte nach einem der Ansprüche 1 bis 11 durchzuführen.

13. System (100) zum Überwachen des Zustands von Anlagen (105, 302A-N) in einer technischen Installation, wobei das System umfasst:
eine oder mehrere Vorrichtungen (130), die dazu ausgelegt sind, einen Anforderungssatz zum Verwalten der mehreren Anlagen (105, 302A-N) bereitzustellen;
eine oder mehrere Erfassungseinheiten (125) zum Bereitstellen von Daten, die mit den mehreren Anlagen (105, 302A-N) verknüpft sind;
eine Wissensdatenbank (122), die Domänenwissen in Bezug auf die mehreren Anlagen (105, 302A-N) umfasst; und
eine Einrichtung (110) nach Anspruch 12, die kommunikativ mit der einen oder den mehreren Vorrichtungen (130) gekoppelt ist, wobei die Einrichtung (110) ausgelegt ist zum Verwalten der mehreren Anlagen (105, 302A-N) basierend auf dem Anforderungssatz, nach einem der Verfahrensansprüche 1 bis 11.

14. Computerprogrammprodukt mit darin gespeicherten maschinenlesbaren Anweisungen, die bei Ausführung durch eine oder mehrere Verarbeitungseinheiten (135) die Verarbeitungseinheiten (135) veranlassen, ein Verfahren nach einem der Ansprüche 1 bis 11 durchzuführen.

## Revendications

1. Procédé (400) de gestion d'une pluralité d'actifs (105, 302A-N) dans une installation technique, le procédé comprenant les étapes suivantes :
recevoir, par une unité de traitement (135), un ensemble d'exigences pour gérer la pluralité d'actifs (105, 302A-N) ;
sélectionner, par l'unité de traitement (135), un ou plusieurs actifs (105, 302A-N) parmi la pluralité d'actifs (105, 302A-N) sur la base de l'ensemble d'exigences reçu ;
mapper, par l'unité de traitement (135), les un ou plusieurs actifs (105, 302A-N) avec des unités de détection correspondantes (125), le mappage des un ou plusieurs actifs (105, 302A-N) avec l'unité de détection correspondante (125) comprenant les étapes suivantes :
déterminer une relation entre les actifs (105, 302A-N) et l'unité de détection (125) à l'aide de données techniques ; et
mapper les actifs (105, 302A-N) à l'unité de détection (125) sur la base de la relation déterminée ;
extraire, par l'unité de traitement (135), des informations associées aux un ou plusieurs actifs sélectionnés (105, 302A-N) et l'ensemble d'exigences reçu, les informations comprenant une connaissance de domaine stockée dans une base de connaissances (122) ;
déterminer, par l'unité de traitement (135), au moins un indicateur de performance sur la base des informations extraites de la base de connaissances (122) et des unités de détection mappées (125), la détermination de l'au moins un indicateur de performance comprenant les étapes suivantes :
sélectionner, par l'unité de traitement (135), au moins une unité de détection (125) requise pour calculer l'au moins un indicateur de performance ;
obtenir, par l'unité de traitement (135), des données à partir de l'au moins une unité de détection (125) sélectionnée requises pour déterminer l'au moins un indicateur de performance ; et
calculer l'au moins un indicateur de performance sur la base des données obtenues ;
définir, par l'unité de traitement (135), un flot de travaux à exécuter sur les actifs (105, 302A-N) sur la base de l'au moins un indicateur de performance déterminé ;
sélectionner, par l'unité de traitement (135), un modèle d'apprentissage automatique configuré parmi un ensemble de modèles d'apprentissage automatique basés sur le flot de travaux défini, où l'ensemble de modèles d'apprentissage automatique comprend un ou plusieurs modèles d'apprentissage automatique configurés pour déterminer un résultat d'une tâche spécifique, le modèle d'apprentissage automatique étant un modèle pour déterminer un résultat d'une tâche spécifique étant donné un ensemble de données d'apprentissage ;
déterminer, par l'unité de traitement (135), un résultat du modèle d'apprentissage automatique sélectionné sur la base de l'ensemble d'exigences reçu, le résultat du modèle d'apprentissage automatique sélectionné étant une fonction de l'au moins un indicateur de performance déterminé des un ou plusieurs actifs sélectionnés (105, 302A-N).

2. Procédé (400) selon la revendication 1, comprenant en outre la présentation du résultat déterminé sur un dispositif client (130) pour gérer la pluralité d'actifs (105, 302A-N) dans l'installation technique.

3. Procédé (400) selon la revendication 1, comprenant en outre les étapes suivantes :
recevoir, par l'unité de traitement (135), un ensemble d'exigences mis à jour ;
déterminer un résultat mis à jour à partir du modèle d'apprentissage automatique sélectionné sur la base de l'ensemble mis à jour d'exigences reçu ;
présenter le résultat mis à jour sur le dispositif client.

4. Procédé (400) selon la revendication 1, comprenant en outre de générer des profils d'utilisateur pour un ou plusieurs utilisateurs associés au dispositif client (130), où chacun des profils d'utilisateur est associé à un ensemble de fonctionnalités accessibles par l'utilisateur.

5. Procédé (600) selon la revendication 1, dans lequel la détermination du résultat du modèle d'apprentissage automatique sélectionné comprend les étapes suivantes :
ajuster un ou plusieurs coefficients du modèle d'apprentissage automatique sélectionné à l'aide des données reçues de l'au moins une unité de détection (125) et des informations extraites ;
déterminer une précision du modèle d'apprentissage automatique ajusté sur la base de l'ensemble d'exigences reçu ;
déterminer le résultat du modèle d'apprentissage automatique ajusté si la précision du modèle d'apprentissage automatique ajusté est supérieure à une première valeur seuil prédéfinie.

6. Procédé (700) selon la revendication 1, comprenant en outre de déterminer le résultat du modèle d'apprentissage automatique sélectionné lorsqu'un nouvel actif (105) est ajouté à l'installation technique, où la détermination du résultat du modèle d'apprentissage automatique sélectionné comprend les étapes suivantes :
mapper le nouvel actif (105) avec les unités de détection (125) associées au nouvel actif (105) ;
sélectionner les nouvelles unités de détection (125) nécessaires à la détermination de l'au moins un indicateur de performance ;
ré-ajuster les coefficients du modèle d'apprentissage automatique sélectionné sur la base des données obtenues à partir des nouvelles unités de détection (125) ; et
déterminer le résultat du modèle d'apprentissage automatique ré-ajusté lorsque le nouvel actif (105) est ajouté à l'installation technique.

7. Procédé (800) selon la revendication 1, comprenant en outre de calculer au moins un indicateur de performance lorsqu'une nouvelle catégorie d'actif (105) est ajoutée à l'installation technique, le calcul de l'au moins un indicateur de performance comprenant les étapes suivantes :
mapper la nouvelle catégorie d'actifs (105) avec les unités de détection (125) associées à la nouvelle catégorie d'actifs (105) ;
obtenir des informations relatives à la nouvelle catégorie d'actifs (105) à partir d'une base de données (150) ;
mettre à jour la base de connaissances (122) avec les informations relatives à la nouvelle catégorie d'actifs (105) ;
calculer un ensemble de formules, l'ensemble de formules étant une fonction des données reçues des unités de détection (125) et d'indicateurs de performance connus ;
déterminer l'au moins un indicateur de performance pour la nouvelle catégorie d'actifs (105) sur la base de l'ensemble calculé de formules ;
réactualiser la base de connaissances (122) avec l'indicateur de performance déterminé.

8. Procédé (900) selon la revendication 5, comprenant en outre de déterminer un résultat du modèle d'apprentissage automatique pour une nouvelle catégorie d'actifs (105), la détermination du résultat comprenant les étapes suivantes :
déterminer un nouveau flux de travaux pour la nouvelle catégorie d'actifs (105) à exécuter sur la base de l'au moins un indicateur de performance déterminé ;
sélectionner un modèle d'apprentissage automatique configuré dans l'ensemble de modèles d'apprentissage automatique préconfigurés, sur la base du nouveau flux de travaux déterminé ;
ajuster un ou plusieurs coefficients du modèle d'apprentissage automatique configuré à l'aide des données reçues de l'au moins une unité de détection (125) et des connaissances métier de la base de connaissances (122) ;
déterminer une précision du modèle d'apprentissage automatique ajusté à la nouvelle catégorie d'actifs (105) sur la base de l'ensemble des exigences ;
déterminer le résultat du modèle d'apprentissage automatique ajusté pour la nouvelle catégorie d'actifs (105) si la précision du modèle d'apprentissage automatique ajusté est supérieure à une deuxième valeur seuil prédéfinie.

9. Procédé (1000) selon la revendication 1, comprenant en outre d'ajouter un nouveau modèle d'apprentissage automatique à l'ensemble de modèles d'apprentissage automatique, l'ajout du nouveau modèle d'apprentissage automatique comprenant les étapes suivantes :
obtenir des données liées à l'actif (105, 302A-N) pour lequel un nouveau modèle d'apprentissage automatique doit être ajouté, les données étant stockées dans la base de données (150) ;
entraîner le nouveau modèle d'apprentissage automatique à partir des données obtenues à partir de la base de données (150) ;
déterminer une précision du nouveau modèle d'apprentissage automatique ;
ajouter le nouveau modèle d'apprentissage automatique à l'ensemble de modèles d'apprentissage automatique liés à l'actif (105, 302A-N) pour une tâche spécifique si la précision du nouveau modèle d'apprentissage automatique est supérieure à une troisième valeur seuil prédéfinie.

10. Procédé (400) selon l'une quelconque des revendications précédentes, dans lequel la tâche est au moins l'une des tâches suivantes : la détection d'anomalie dans l'actif (105, 302A-N), l'analyse de cause fondamentale de l'actif (105, 302AN), l'estimation de la durée de vie utile restante de l'actif (105, 302A-N), la prévision des paramètres associés à l'actif (105, 302A-N), l'optimisation des performances de l'actif (105, 302A-N), et l'optimisation de l'énergie de l'actif (105, 302A-N).

11. Procédé selon la revendication 1, comprenant en outre de mettre à jour automatiquement le mappage entre l'actif (105, 302A-N) et l'unité de détection (125) en temps réel lorsque l'unité de détection (125) est en ligne.

12. Appareil (110) de surveillance d'une pluralité d'actifs (105, 302A-N) dans une installation technique, l'appareil (110) comprenant :
une ou plusieurs unités de traitement (135) ; et
une unité de mémoire (140) couplée en communication aux une ou plusieurs unités de traitement (135), où l'unité de mémoire (140) comprend un module de gestion d'actifs (165) stocké sous la forme d'instructions lisibles par machine exécutables par les une ou plusieurs unités de traitement (135), où le module de gestion d'actifs (165) est configuré pour réaliser les étapes de procédé selon l'une quelconque des revendications 1 à 11.

13. Système (100) de gestion d'une pluralité d'actifs (105, 302A-N) dans une installation technique, le système comprenant :
un ou plusieurs dispositifs (130) configurés pour fournir un ensemble d'exigences pour gérer la pluralité d'actifs (105, 302A-N) ;
une ou plusieurs unités de détection (125) pour fournir des données associées à la pluralité d'actifs (105, 302A-N) ;
une base de connaissances (122) comprenant des connaissances métier liées à la pluralité d'actifs (105, 302A-N) ; et
un appareil (110) selon la revendication 12, couplé en communication aux un ou plusieurs dispositifs (130), l'appareil (110) étant configuré pour gérer la pluralité d'actifs (105, 302A-N) sur la base de l'ensemble des exigences selon l'une quelconque des revendications de procédé 1 à 11.

14. Produit programme d'ordinateur dans lequel sont stockées des instructions lisibles par machine qui, lorsqu'elles sont exécutées par une ou plusieurs unités de traitement (135), amènent les unités de traitement (135) à réaliser un procédé selon l'une quelconque des revendications 1 à 11.
